# EUROPEAN PATENT APPLICATION

(11) **EP 4 773 547 A1**
(43) Date of publication of application: **08.07.2026**
(21) Application number: 24878681.6
(22) Date of filing: 22.08.2024
(51) Int. Cl.: H04L 9/40

(54) **DATA TRANSMISSION METHOD, APPARATUS, STORAGE MEDIUM AND DEVICE**

(30) Priority: 17.10.2023 CN 202311348871
(71) Applicant: Tencent Technology (Shenzhen) Company Limited, Shenzhen, Guangdong 518057 (CN)
(72) Inventor: LONG, Haotian, Shenzhen, Guangdong 518057 (CN); ZHOU, Rongbin, Shenzhen, Guangdong 518057 (CN); DENG, Kunli, Shenzhen, Guangdong 518057 (CN); HUANG, Canhui, Shenzhen, Guangdong 518057 (CN)
(74) Representative: Gunzelmann, Rainer
(86) International application number: PCT/CN2024/113806
(87) International publication number: WO 2025/082030

(57) **Abstract**

Disclosed in the embodiments of the present application are a data transmission method, an apparatus, a storage medium and a device, which can be applied to various scenarios such as cloud technology, artificial intelligence, smart traffic and aided driving. The method comprises: by means of a dedicated transport layer security protocol between an applet and a server, sending a handshake request to the server; by means of the dedicated transport layer security protocol, receiving a dynamic key returned, on the basis of the handshake request, by the server and an encrypted string obtained on the basis of the dynamic key; acquiring data to be transmitted, and using the dynamic key to encrypt the data, so as to obtain a ciphertext; and, by means of a universal transport layer security protocol, sending the ciphertext and the encrypted string to the server, so that the server obtains the dynamic key on the basis of decrypting the encrypted string, and decrypts the ciphertext on the basis of the dynamic key to obtain decrypted data.

## Description

### RELATED APPLICATION

The present application claims priority to Chinese Patent Application No. 202311348871.8, filed with the China National Intellectual Property Administration on October 17, 2023 and entitled "DATA TRANSMISSION METHOD, APPARATUS, STORAGE MEDIUM, AND DEVICE", which is incorporated herein by reference in its entirety.

### FIELD OF THE TECHNOLOGY

The present application relates to the field of communication technologies, and specifically, to a data transmission method, an apparatus, a storage medium, and a device.

### BACKGROUND OF THE APPLICATION

A hypertext transfers protocol secure (HTTPS) is a transfer protocol for secure communication through a computer network. The HTTPS is based on the HTTP for communication, but the transport layer security (TLS) protocol is used to encrypt a data packet. The HTTPS is an HTTP channel aimed at security, ensuring the safety of a transmission process through transmission encryption and identity verification based on the HTTP.

In a related art, the TLS may encrypt a data packet in a symmetric encryption manner, that is, a server transmits a static key to a client by means of the TLS, so that the client and the server both share a same static key. A data transmitting party encrypts a plaintext (i.e., original data) and the static key together by using a special encryption algorithm, so that the plaintext becomes a complex ciphertext, and transmits the complex ciphertext to a data receiving party. After receiving the ciphertext, the data receiving party decrypts the ciphertext by using the static key and an inversion algorithm of the special encryption algorithm, and restores the ciphertext to a readable plaintext, to ensure the security of data transmission.

### SUMMARY

Embodiments of the present application provide a data transmission method, an apparatus, a storage medium, and a device, which can improve the security of data transmission.

Embodiments of the present application provide the following technical solutions:
A data transmission method, performed by a terminal device, including:
by means of a dedicated transport layer security protocol between an applet running in the terminal device and a server, transmitting a handshake request to the server, the dedicated transport layer security protocol providing higher security than a general transport layer security protocol;
by means of the dedicated transport layer security protocol, receiving a dynamic key and an encrypted string obtained according to the dynamic key that are returned by the server;
obtaining to-be-transmitted data and encrypting the data by using the dynamic key to obtain a ciphertext; and
by means of the general transport layer security protocol, transmitting the ciphertext and the encrypted string to the server, so that the server decrypts the encrypted string to obtain the dynamic key, and decrypts the ciphertext by using the dynamic key to obtain decrypted data.

A data transmission method, performed by a server device, including:
receiving a handshake request that is transmitted by an applet by means of a dedicated transport layer security protocol, the dedicated transport layer security protocol providing higher security than a general transport layer security protocol;
generating a random dynamic key according to the handshake request and obtaining an encrypted string according to the dynamic key;
by means of the dedicated transport layer security protocol, returning the dynamic key and the encrypted string to the applet, so that the applet encrypts to-be-transmitted data by using the dynamic key to obtain a ciphertext;
receiving the encrypted ciphertext and the encrypted string that are transmitted by the applet by means of the general transport layer security protocol; and
decrypting the encrypted string to obtain the dynamic key, and decrypting the ciphertext by using the dynamic key to obtain decrypted data.

A data transmission apparatus, including:
a first transmitting unit, configured for, by means of a dedicated transport layer security protocol between an applet and a server, transmitting a handshake request to the server, the dedicated transport layer security protocol providing higher security than a general transport layer security protocol;
a first receiving unit, configured for, by means of the dedicated transport layer security protocol, receiving a dynamic key and an encrypted string obtained according to the dynamic key that are returned by the server according to the handshake request;
an encryption unit, configured for obtaining to-be-transmitted data and encrypting the data by using the dynamic key to obtain a ciphertext; and
a second transmitting unit, configured for, by means of the general transport layer security protocol, transmitting the ciphertext and the encrypted string to the server, so that the server decrypts the encrypted string to obtain the dynamic key, and decrypts the ciphertext by using the dynamic key to obtain decrypted data.

A data transmission apparatus, including:
a first receiving unit, configured for receiving a handshake request that is transmitted by an applet by means of a dedicated transport layer security protocol, the dedicated transport layer security protocol providing higher security than a general transport layer security protocol;
a generation unit, configured for generating a random dynamic key according to the handshake request, and obtaining an encrypted string according to the dynamic key;
a returning unit, configured for, by means of the dedicated transport layer security protocol, returning the dynamic key and the encrypted string to the applet, so that the applet encrypts to-be-transmitted data by using the dynamic key to obtain a ciphertext;
a second receiving unit, configured for receiving the ciphertext and the encrypted string that are transmitted by the applet by means of the general transport layer security protocol; and
a decryption unit, configured for decrypting the encrypted string to obtain the dynamic key, and decrypting the ciphertext by using the dynamic key to obtain decrypted data.

A computer-readable storage medium, having a plurality of instructions stored therein, the instructions being suitable to be loaded by a processor to execute operations of the foregoing data transmission methods.

A computer device, including a memory, a processor, and a computer program stored in the memory and executable in the processor, the processor, when executing the computer program, implementing operations of the foregoing data transmission methods.

A computer program product or a computer program, including computer instructions, the computer instructions being stored in a storage medium. A processor of a computer device reads the computer instructions from the storage medium, and the processor executes the computer instructions, to implement operations of the foregoing data transmission methods.

Other features and advantages of the present disclosure will be set forth in the following description, and will partially become apparent in the description, or can be learned by implementing the present disclosure. Objectives and other advantages of the present disclosure can be achieved and acquired through structures particularly indicated in the description, the claims, and the accompanying drawings.

### BRIEF DESCRIPTION OF THE DISCLOSURE

To describe the technical solutions in the embodiments of the present application more clearly, the following briefly describes accompanying drawings required for describing the embodiments. Apparently, the accompanying drawings in the following description show merely some embodiments of the present application, and a person skilled in the art may still derive other drawings from these accompanying drawings without creative efforts.
FIG. 1 is a schematic structural diagram of a protocol of a data transmission method according to some embodiments of the present application.
FIG. 2 is a schematic scenario diagram of a data transmission system according to some embodiments of the present application.
FIG. 3 is a schematic scenario diagram of a login system according to some embodiments of the present application.
FIG. 4 is a schematic scenario diagram of a virtual resource payment system according to some embodiments of the present application.
FIG. 5 is a schematic flowchart of a data transmission method according to some embodiments of the present application.
FIG. 6 is a schematic scenario diagram of a data transmission method according to some embodiments of the present application.
FIG. 7 is another specific flowchart of operation 203 in FIG. 5.
FIG. 8 is another schematic scenario diagram of a data transmission method according to some embodiments of the present application.
FIG. 9 is a schematic flowchart of a data transmission method according to some embodiments of the present application.
FIG. 10 is another specific flowchart of operation 405 in FIG. 9.
FIG. 11 is a schematic interaction diagram of a data transmission method according to some embodiments of the present application.
FIG. 12 is an interaction flowchart of a data transmission method according to some embodiments of the present application.
FIG. 13 is a schematic structural diagram of a data transmission apparatus according to some embodiments of the present application.
FIG. 14 is a schematic structural diagram of a data transmission apparatus according to some embodiments of the present application.
FIG. 15 is a schematic structural diagram of a terminal according to some embodiments of the present application.
FIG. 16 is a schematic structural diagram of a server according to some embodiments of the present application.

### DESCRIPTION OF EMBODIMENTS

To enable a person in the art to better understand the solution of the present application, the following clearly and completely describes the technical solutions in the embodiments of the present application with reference to the accompanying drawings in the embodiments of the present application. Apparently, the described embodiments are only some of the embodiments of the present application rather than all of the embodiments. All other embodiments obtained by a person skilled in the art based on the embodiments of the present application without inventive efforts shall fall within the protection scope of the present application.

In a specific implementation of the present application, related data such as to-be-encrypted data is involved. When the foregoing embodiments of the present application are used in specific products or technologies, user permissions or agreements need to be obtained, and the collection, use and processing of relevant data need to comply with the relevant laws, regulations and standards.

In addition, when the related data such as to-be-encrypted data needs to be obtained in the embodiments of the present application, individual permission or individual consent of the related data such as to-be-encrypted data is obtained through a pop-up window or jumping to a confirmation page. After the individual permission or the individual consent of the related data such as to-be-encrypted data is explicitly obtained, necessary related data such as to-be-encrypted data for enabling the embodiments of the present application to operate normally is obtained.

In some processes described in the specification, the claims, and the foregoing accompanying drawings, a plurality of operations occurring in a specific sequence is included. However, these operations may not be performed in the sequence in which the operations occur in this specification or performed in parallel. The sequence numbers of the operations are merely for distinguishing different operations, and do not indicate any execution sequence. In addition, descriptions such as "first", "second", or "preset" herein are intended to distinguish similar objects but do not necessarily describe a specific order or sequence.

Before the embodiments of the present disclosure are further described in detail, the nouns and terms involved in the embodiments of the present disclosure are described. The nouns and terms involved in the embodiments of the present disclosure are suitable to explain as follows:

To enable a person in the art to better understand the solution of the present application, the following clearly and completely describes the technical solutions in the embodiments of the present application with reference to the accompanying drawings in the embodiments of the present application. Apparently, the described embodiments are only some of the embodiments of the present application rather than all embodiments. All other embodiments obtained by a person skilled in the art based on the embodiments of the present application without inventive efforts shall fall within the protection scope of the present application.

In a specific implementation of the present application, related data such as to-be-encrypted data is involved. When the foregoing embodiments of the present application are used in specific products or technologies, user permissions or agreements need to be obtained, and the collection, use and processing of relevant data need to comply with the relevant laws, regulations and standards.

In addition, when the related data such as to-be-encrypted data needs to be obtained in the embodiments of the present application, individual permission or individual consent of the related data such as to-be-encrypted data is obtained through a pop-up window or jumping to a confirmation page. After the individual permission or the individual consent of the related data such as to-be-encrypted data is explicitly obtained, necessary related data such as to-be-encrypted data for enabling the embodiments of the present application to operate normally is obtained.

In some processes described in the specification, the claims, and the foregoing accompanying drawings, a plurality of operations occurring in a specific sequence is included. However, these operations may not be performed in the sequence in which the operations occur in this specification or performed in parallel. The sequence numbers of the operations are merely for distinguishing different operations, and do not indicate any execution sequence. In addition, descriptions such as "first", "second", or "preset" herein are intended to distinguish similar objects but do not necessarily describe a specific order or sequence.

Before the embodiments of the present disclosure are further described in detail, the nouns and terms involved in the embodiments of the present disclosure are described. The nouns and terms involved in the embodiments of the present disclosure are suitable to explain as follows:

A transmission control protocol/Internet protocol (TCP/IP) refers to a protocol cluster that can implement information transmission between a plurality of different networks. The TCP/IP protocol not only refers to two protocols, the TCP and the IP, but refers to a protocol suite including protocols such as a file transfer protocol (FTP), a simple mail transfer protocol (SMTP), a TCP, a user datagram protocol (UDP), and the Internet protocol (IP). It is only because the TCP protocol and the IP protocol are the most representative within the TCP/IP protocol suite that the TCP/IP protocol suite is referred to as the TCP/IP protocol. The TCP/IP protocol is also referred to as a network communication protocol, and is the most basic communication protocol used in a network.

The hypertext transfer protocol (HTTP) is an application layer protocol used in distributed, cooperative, and hypermedia information systems, is a request-and-response-based, stateless, application layer protocol, and implements data transmission based on the TCP/IP protocol. The HTTP allows transmission of any type of data object.

An applet is an application program that can be used in an instant messaging client without needing to be downloaded and installed.

Symmetric encryption refers to a process in which data is encrypted and decrypted by using a same key.

A uniform resource locator (URL) is a representation method used for a specified information location on a web service program of the Internet, and may be understood as web address.

A transport layer security (TLS) protocol is used for providing confidentiality and data integrity between two communication application programs.

A managed mode transport layer security (MMTLS) protocol is a transport layer security protocol based on the TLS protocol, and performs encryption and authentication on the transport layer by using the TLS protocol. Unlike the conventional TLS protocol, the MMTLS uses a managed mode, that is, partial control rights of the TLS protocol are delegated to an application layer for management. The TLS protocol implemented in an instant messaging client provides confidentiality and data integrity between the instant messaging client and a server.

The MMTLS does not trust a self-signed certificate, but trusts only a certificate carried by the instant messaging client. In addition, the entire MMTLS protocol is highly customized, rendering an existing packet capturing tool incapable of analyzing. That is, because the MMTLS are customized, the existing packet capturing tool cannot capture specific content of the MMTLS. Therefore, subsequent transmission of a dynamic key by using the MMTLS is secure.

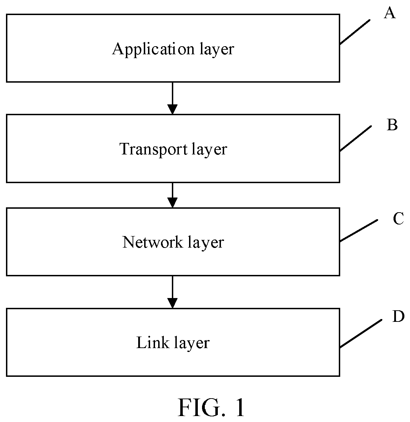

To better understand the MMTLS, also referring to FIG. 1, FIG. 1 is a schematic structural diagram of a protocol of a data transmission method according to embodiments of the present application. The TCP/IP uses a layered design mode, dividing the protocol into four layers from top to bottom, which are respectively:

Application layer A: The application layer A is a top-layer protocol in the TCP/IP protocol suite, and provides a communication service between an object interface and an application program. For example, the HTTP is within the application layer, along with protocols such as the FTP and the SMTP. Application layer protocols are protocols that directly interact with an object. The application layer protocols process specific types of data, and forward the data to a next-layer protocol for processing.

Transport layer B: The transport layer B provides an end-to-end data transmission service, such as the TCP and UDP protocols. The transport layer protocol is responsible for transmitting data from the application layer to a network layer, and ensures functions such as reliability of data transmission, traffic control, and error detection.

Network layer C: the network layer C mainly provides a data packet transmission service across networks, such as the IP protocol. The network layer protocol is responsible for transmitting the data packet from a source host to a target host, and implementing data transmission between different networks by using technologies such as routing and forwarding.

Link layer D: the link layer D refers to data transmission on the physical layer, for example, protocols such as Ethernet and Wi-Fi. The link layer protocol is responsible for transmitting data from the network layer to a physical layer, and transmitting the data to the receiver host through the physical layer.

The physical layer (not identified) is responsible for bit stream transmission between nodes, that is, responsible for physical transmission. Protocols of this layer are related to both a link and a transmission medium. Commonly speaking, the physical layer is a physical means of connecting computers.

The MMTLS operates between the application layer and the network layer without affecting original network policies, as the layers are all implemented based on the TCP.

Literally, a handshake protocol is negotiating, before communication encryption, an algorithm suite and an encryption key that are used for encryption. This is analogous to the courteous handshake typically required between two strangers before initiating a conversation.

In a computer network communication scenario, an HTTPS is generally used for communication. The HTTPS is based on the HTTP for communication, but uses the general transport layer security protocol to encrypt a data packet.

In a related art, the TLS may encrypt a data packet in a symmetric encryption manner, that is, a server transmits a static key to a client by means of the TLS, so that the client and the server both share a same static key. A data transmitting party encrypts a plaintext and the static key together by using a special encryption algorithm, so that the plaintext becomes a complex ciphertext, and transmits the complex ciphertext to a data receiving party. After receiving the ciphertext, the data receiving party decrypts the ciphertext by using the static key and an inversion algorithm of the special encryption algorithm, and restores the ciphertext to a readable plaintext, to ensure the security of data transmission.

However, since the static key used in the data transmission manner is directly transmitted via TLS, the static key is vulnerable to analysis and crack. An attacker may obtain the key by means of attacking. Meanwhile, because the static key is fixed, once the attacker successfully obtains the static key, all ciphertexts are easily cracked, resulting in data leakage.

To resolve the foregoing problems, embodiments of the present application provide a data transmission method: by means of a dedicated transport layer security protocol with higher security, a dynamic key and an encrypted string obtained by encrypting the dynamic key are transmitted. To-be-transmitted data is encrypted by using the dynamic key, to generate corresponding ciphertext. By means of the general transport layer security protocol, the ciphertext and the encrypted string are transmitted to a server, so that the server performs decryption by using the encrypted string to obtain the dynamic key, and decrypts the ciphertext to obtain decrypted data. Therefore, the method ensures that the dynamic key is not intercepted by an attacker. And as the dynamic key is transmitted to the server in a encrypted string form by means of the general transport layer security protocol, the method prevents the dynamic key from being transmitted in a plaintext form, thereby effectively preventing the dynamic key from being cracked, and improving data transmission security.

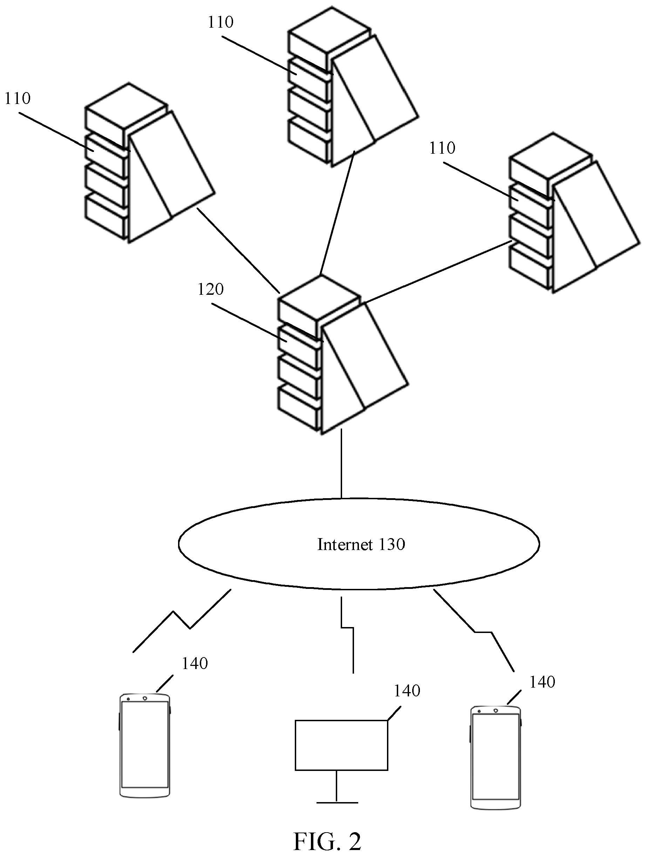

Still referring to FIG. 2, FIG. 2 is a schematic scenario diagram of a data transmission system according to some embodiments of the present application, including a terminal 140, the Internet 130, a gateway 120, a server 110, and the like.

The terminal 140 includes, but not limited to, a phone, a computer, an intelligent voice interaction device, a smart household electrical appliance, a vehicle-mounted terminal, and an aircraft. The embodiments of the present application may be applied to various scenarios, including but not limited to, cloud technology, artificial intelligence, smart transportation, assisted driving, and the like. In addition, the terminal 140 may be a single device or a collection of a plurality of devices. For example, a plurality of desktop computers are connected to each other through a local area network, and share a display and the like to work together to form a terminal 140. The terminal 140 may communicate with the Internet 130 in a wired or wireless manner to exchange data.

The server 110 is a computer system that provides some services for the terminal 140. Compared with the ordinary terminal 140, the server 110 has higher requirements in aspects such as stability, security, and performance. The server 110 may be an independent physical server, or may be a server cluster formed by a plurality of physical servers or a distributed system, or may be a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

The gateway 120 is alternatively referred to as an inter-network connector or a protocol converter. The gateway implements network interconnection on a transport layer and is a computer system or device providing a conversion function. The gateway is a translator between two systems that use different communication protocols, data formats or languages, or even completely different architectures. Meanwhile, the gateway may further provide filtering and security functions. A message transmitted by the terminal 140 to the server 110 needs to be transmitted to the corresponding server 110 through the gateway 120. A message transmitted by the server 110 to the terminal 140 also needs to be transmitted to the corresponding terminal 140 through the gateway 120.

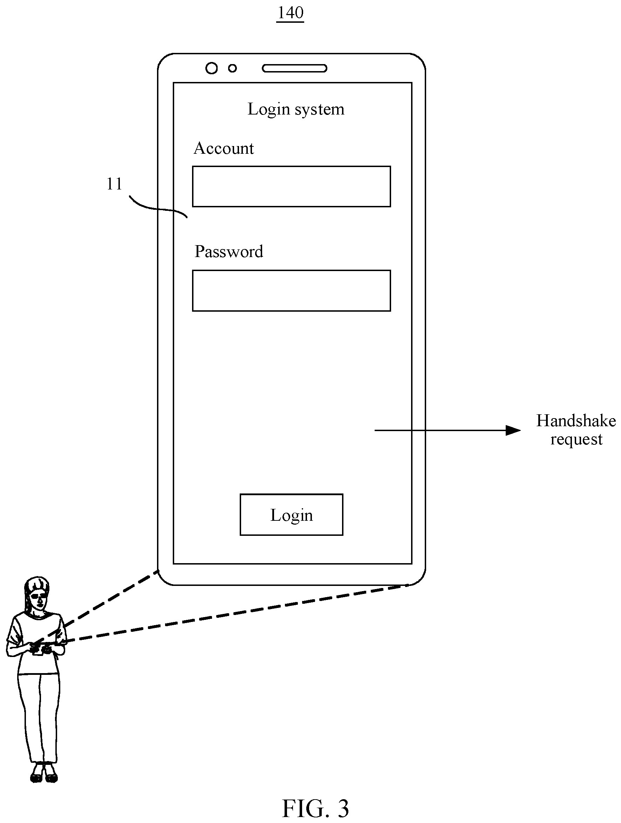

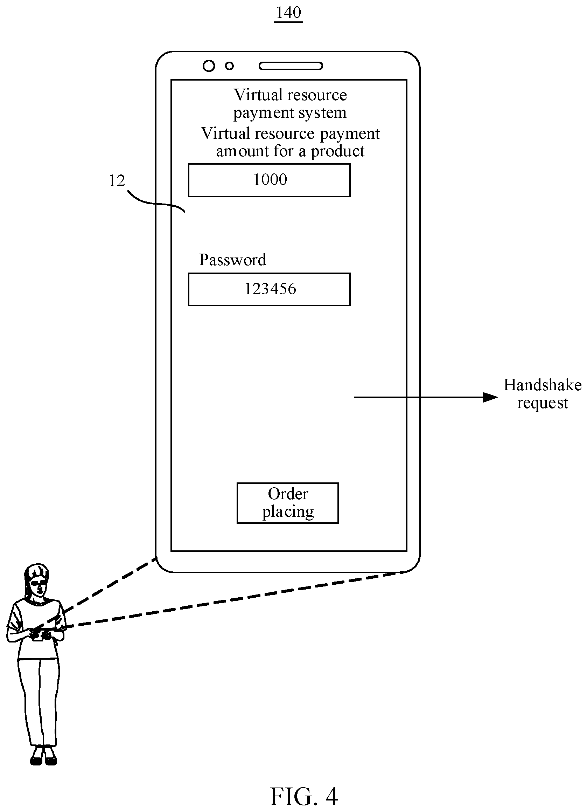

The embodiments of the present application may be applied to various scenarios, for example, a login system scenario shown in FIG. 3 and a virtual resource payment system scenario shown in FIG. 4.

### (1) Login system scenario

The login system may implement a login function and complete login-related services. As shown in FIG. 3, on an interface 11 of the login system of a terminal, a user can input an account and password to log in, where the interface 11 may be an applet client interface. When the interface 11 of the login system is activated and displayed, the terminal generates a handshake request. By means of a dedicated transport layer security protocol between the applet and a server, the terminal transmits the handshake request to the server, the dedicated transport layer security protocol providing higher security than a general transport layer security protocol. By means of the dedicated transport layer security protocol, the terminal receives a dynamic key and an encrypted string that is obtained by encrypting the dynamic key that are returned by the server according to the handshake request. The terminal obtains to-be-transmitted data (which can be understood as login account data and password data) and encrypts the data by using the dynamic key to generate a ciphertext. By means of the general transport layer security protocol, the terminal transmits the ciphertext and the encrypted string to the server, so that the server obtains the dynamic key by decrypting the encrypted string and decrypts the ciphertext by using the dynamic key to obtain decrypted data.

### (2) Virtual resource payment system scenario

The virtual resource payment system may implement a payment function and complete payment-related services. As shown in FIG. 4, on an interface 12 of the virtual resource payment system of a terminal, a user can input a virtual resource payment amount for a product (e.g., 1000) and a payment password (e.g., 123456), then click an order button to implement a payment function, where the interface 12 may be an applet client interface. When the interface 12 of the virtual resource payment system is activated and displayed, the terminal generates a handshake request. By means of a dedicated transport layer security protocol between the applet and a server, the terminal transmits the handshake request to the server, the dedicated transport layer security protocol providing higher security than a general transport layer security protocol. By means of the dedicated transport layer security protocol, the terminal receives a dynamic key and an encrypted string obtained by encrypting the dynamic key that are returned by the server according to the handshake request. The terminal obtains to-be-transmitted data (which can be understood as the virtual resource payment data and the password data) and encrypts the data by using the dynamic key to generate a ciphertext. By means of the general transport layer security protocol, the terminal transmits the ciphertext and the encrypted string to the server, so that the server obtains the dynamic key by decrypting the encrypted string and decrypts the ciphertext by using the dynamic key to obtain decrypted data.

The schematic scenario diagram of the data transmission system shown in FIG. 2 is merely an example. The data transmission system and scenario described in the embodiments of the present application are intended to describe the technical solutions in the embodiments of the present application more clearly and do not constitute a limitation to the technical solutions provided in the embodiments of the present application. A person skilled in the art may learn that with the evolution of the data transmission system and the emergence of a new business scenario, the technical solutions provided in the embodiments of the present application are further applicable to similar technical problems.

In the present embodiment, a description is made from the perspective of a data transmission apparatus. The data transmission apparatus may be specifically integrated into a computer device that has a storage unit and in which a microprocessor is installed to have a computing capability. The computer device may be a terminal. An instant messaging client may be installed in the terminal. An applet may run on the instant messaging client. In the present embodiment, the applet run on the terminal is used for description. In some embodiments of the present application, the server interacting with the terminal may be an instant messaging server.

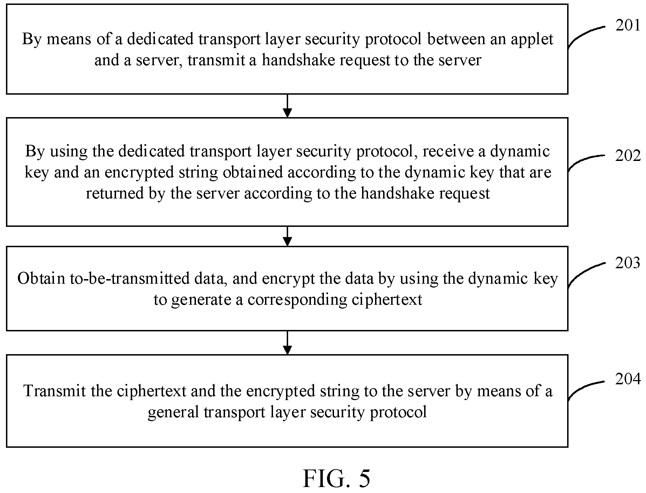

Referring to FIG. 5, FIG. 5 is a schematic flowchart of a data transmission method according to embodiments of the present application. The data transmission method includes:
Operation 201:By means of a dedicated transport layer security protocol between an applet and a server, transmit a handshake request to the server.

A TLS may encrypt a data packet in a symmetric encryption manner, that is, a server transmits a static key to a client by means of the TLS, so that the client and the server both share a same static key. A data transmitting party encrypts a plaintext and the static key together by using a special encryption algorithm, so that the plaintext becomes a complex ciphertext, and transmits the complex ciphertext to a data receiving party. After receiving the ciphertext, the data receiving party decrypts the ciphertext by using the static key and an inversion algorithm of the special encryption algorithm, and restores the ciphertext to a readable plaintext, to ensure the security of data transmission.

However, since the static key used in the data transmission manner is directly transmitted via TLS, the static key is vulnerable to analysis and crack. An ttacker may obtain the key by means of attacking. Meanwhile, because the static key is fixed, once the attacker successfully obtains the static key, all ciphertexts are easily cracked, resulting in data leakage. Moreover, the TLS can only provide security of a transport layer. However, with the progress of packet capturing tools and analysis tools, sole reliance on TLS cannot resist a packet capturing analysis tool based on a self-signed certificate, and remains vulnerable to attacks.

In the embodiments of the present application, the applet relies on an instant messaging client, that is, the instant messaging client may serve as a running container of the applet, and the applet runs on the instant messaging client. Therefore, the applet may directly invoke a corresponding dedicated transport layer security protocol of the instant messaging client.

In this way, to resolve the foregoing problem and ensure the security of data transmission, in the embodiments of the present application, the handshake request may be transmitted to the server by means of the dedicated transport layer security protocol between the applet and the server, that is, the dedicated transport layer security protocol. The handshake request may carry an applet identifier of the applet and a instant messaging client version, so that the server may verify, according to the applet identifier and the instant messaging client version, whether the handshake request is transmitted by an applet and an instant messaging client that can be used normally.

Because the entire protocol of the dedicated transport layer security protocol is highly customized, an existing packet capturing tool is incapable of analyzing. That is, because the dedicated transport layer security protocol is customized, the existing packet capturing tool cannot capture a handshake request of the dedicated transport layer security protocol, which prevents an attacker from monitoring the handshake request of an applet. Therefore, the dedicated transport layer security protocol provides higher security than a general transport layer security protocol.

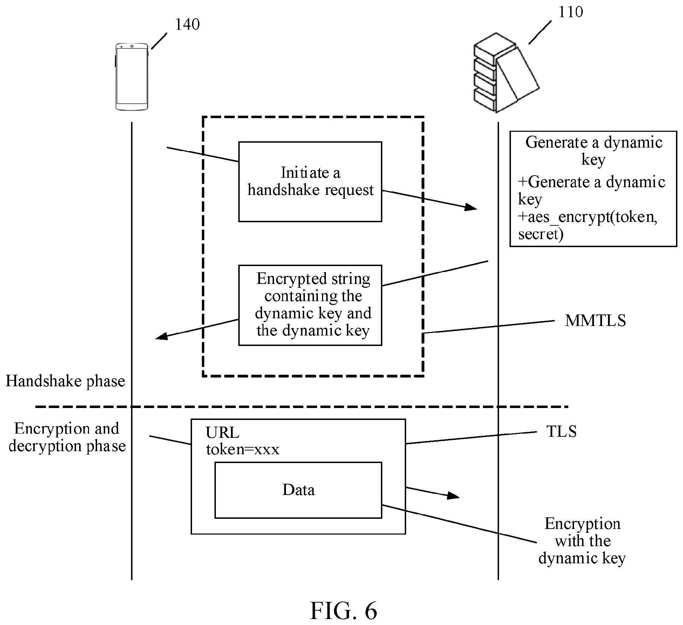

To better describe the embodiment of the present application, also referring to FIG. 6, an applet on a terminal 140 may transmit a handshake request to a server by means of a dedicated transport layer security protocol between the applet and the server, to ensure privacy of the handshake request.

Operation 202: By means of the dedicated transport layer security protocol, receive a dynamic key and an encrypted string that is obtained according to the dynamic key that are returned by the server according to the handshake request.

After receiving the handshake request transmitted by the applet by means of the dedicated transport layer security protocol, the server may generate the random dynamic key according to the handshake request. The dynamic key may be randomly generated by using a secure random number generator in the server, and may be 128, 256, or the like in length. Unlike related arts, in the embodiments of the present application, different dynamic keys are generated based on different handshake requests, that is, the dynamic key vary in real time, thereby better defending against cracking by an attacker.

Because transmission capability of the dedicated transport layer security protocol is limited, subsequent data transmission still relies on the general transport layer security protocol to transmit. To prevent the dynamic key from being transmitted in a form of a plaintext on the general transport layer security protocol, the server may encrypt the dynamic key according to preset encryption rules, to obtain a corresponding encrypted string.

Further, the server may, by means of the dedicated transport layer security protocol, return the dynamic key and the encrypted string to the applet in the embodiments of the present application. In this way, in the embodiments of the present application, the dynamic key and the encrypted string that are obtained by encrypting the dynamic key that are returned by the server, may be received by means of the dedicated transport layer security protocol, to implement handshake. That is, a connection is established between the applet and the server. Correspondingly, because an entire protocol of the dedicated transport layer security protocol is highly customized, an existing packet capturing tool is incapable of analyzing. That is, because the dedicated transport layer security protocol is customized, the existing packet capturing tool cannot capture the dynamic key and the encrypted string transmitted by means of a dedicated transport layer security protocol, thereby better ensuring security of the dynamic key.

Still referring to FIG. 6, the server 110 may generate a random dynamic key according to the handshake request, and generate an encrypted string token through an aes_encrypt(token, secret) function based on the secret (i.e., the dynamic key), and transmit, by means of the dedicated transport layer security protocol, the dynamic key and the encrypted string containing the dynamic key to the applet on the terminal 140. Correspondingly, the applet on the terminal 140 may receive the dynamic key and the encrypted string containing the dynamic key.

In some embodiments, to implement better data protection, each dynamic key may be assigned a corresponding validity duration. That is, the dynamic key will correspondingly expire upon reaching the validity duration. The applet needs to re-transmit a handshake request, and re-receives an updated dynamic key and an encrypted string by means of the dedicated transport layer security protocol, so that the dynamic key updates periodically to better prevent an attacker from analyzing. The validity duration may be manually set, such as to 15 minutes or 30 minutes.

In some embodiments, an applet may be applied to different scenarios, such as a login scenario, an order placing scenario, and an information browsing scenario. The login scenario represents that a user implements account login through an applet. The order placing scenario represents that a user implements commodity ordering through an applet. The information browsing scenario represents that a user implements information browsing through an applet. Each scenario has different security requirements. For example, login scenarios require higher security than order placing scenarios, and the order placing scenarios require higher security than information browsing scenarios. Based on this, different validity durations may be set for dynamic keys allocated to different usage scenarios.

Based on this, a handshake request may carry a corresponding scenario type. The scenario type indicates a corresponding scenario of an applet when the handshake request is generated. And the scenario type may include, but is not limited to, a login scenario type, an order placing scenario type, or an information browsing scenario type. When the applet generates a handshake request in a login scenario, a scenario type carried by the handshake request is the login scenario type. When the applet generates a handshake request in an order placing scenario, a scenario type carried by the handshake request is the order placing scenario type. Correspondingly, when the applet generates a handshake request in an information browsing scenario, a scenario type carried by the handshake request is the information browsing scenario type.

In this way, the method further includes:
by means of the dedicated transport layer security protocol, receiving a corresponding validity duration of the dynamic key that is returned by the server according to the handshake request;
where the validity duration is determined by the server according to the scenario type carried by the handshake request.

Specifically, because the handshake request carries a corresponding scenario type, when determining a corresponding dynamic key, the server may automatically match a corresponding validity duration according to the scenario type. A mapping relationship between a scenario type and a validity duration is shown in Table 1. Table 1 is the preset mapping table. The preset mapping table includes mapping relationships between different scenario types and validity durations. Assuming that the scenario type is a login scenario type, an obtained validity duration is 5 minutes. Assuming that the scenario type is an order placing scenario type, the obtained validity duration is 10 minutes. Assuming that the scenario type is an information browsing scenario type, the obtained validity duration is 30 minutes.

**Table 1**

| Scenario type | Validity duration |
|---|---|
| Login scenario type | 5 minutes |
| Order placing scenario type | 10 minutes |
| Information browsing scenario type | 30 minutes |

Based on this, the server may return, by means of a dedicated transport layer security protocol, the dynamic key, the validity duration corresponding to the dynamic key, and the encrypted string to the applet. Correspondingly, the applet may receive, by means of the dedicated transport layer security protocol, the dynamic key, the validity duration corresponding to the dynamic key, and the encrypted string that is obtained by encrypting the dynamic key that are returned by the server according to the handshake request. In this way, the validity duration of the corresponding dynamic key may be flexibly set according to security requirements of different scenario types when the applet initiates the handshake request, thereby improving the flexibility of validity duration setting.

In some implementations, because an application scenario of an applet may vary in real time, for example, because the application scenario of the applet is switched from an order placing scenario type to a login scenario type, a requirement on a validity duration of a dynamic key is also different due to a scenario change. Therefore, after receiving, by means of a dedicated transport layer security protocol, the dynamic key, the validity duration corresponding to the dynamic key, and the encrypted string that is obtained by encrypting the dynamic key that are returned by the server according to the handshake request, the applet further needs to monitor the scenario type change in real time, to ensure real time update of the dynamic key, which specifically includes the following manners:
when detecting a change in the scenario type, deleting the dynamic key, the validity duration corresponding to the dynamic key, and the encrypted string that is obtained by encrypting the dynamic key; and
by means of the dedicated transport layer security protocol between the applet and the server, re-transmitting a handshake request to the server, and by means of the dedicated transport layer security protocol, re-receiving an updated dynamic key, validity duration, and encrypted string.

Specifically, the applet may continuously detect whether the scenario type changes. When detecting a change in the scenario type, it indicates that the scenario changes, and the currently stored dynamic key, the validity duration corresponding to the dynamic key, and the encrypted string that is obtained by encrypting the dynamic key need to be deleted.

Further, to achieve better security, the dynamic key needs to be updated. Therefore, the foregoing embodiment may be performed again, to re-receive a dynamic key, a validity duration, and an encrypted string updated in a changed scenario type. This ensures real time synchronization between the dynamic key and the application scenario of the applet, thereby improving the flexibility of dynamic key update.

In some implementations, an applet may be applied to different scenarios, such as a login scenario, an order placing scenario, and an information browsing scenario. The login scenario represents that a user implements account login through an applet. The order placing scenario represents that a user implements commodity ordering through an applet. The information browsing scenario represents that a user implements information browsing through an applet. Each scenario has different security requirements. For example, login scenarios require higher security than order placing scenarios, and the order placing scenarios require higher security than information browsing scenarios.

In addition, there are various types of applets, for example, an office type applet, a game type applet, or a life type applet. Each type of applet has different security requirements. For example, the office type applet needs higher security than the life type applet, and the life type applet needs higher security than the game type applet. Based on this, different validity durations may be flexibly set with reference to an application scenario of an applet and a type of the applet.

Based on this, a handshake request may simultaneously carry both the scenario type and an application privacy level. The scenario type indicates a corresponding scenario of the applet when a handshake request is generated. And the scenario type may include, but is not limited to, a login scenario type, an order placing scenario type, or an information browsing scenario type. When the applet generates a handshake request in a login scenario, a scenario type carried by the handshake request is the login scenario type. When the applet generates a handshake request in an order placing scenario, a scenario type carried by the handshake request is the order placing scenario type. Correspondingly, when the applet generates a handshake request in an information browsing scenario, a scenario type carried by the handshake request is the information browsing scenario type.

The application privacy level indicates a privacy level corresponding to an applet type when the handshake request is generated. The application privacy level includes, but is not limited to, three levels: high, medium, and low. In this way, the application privacy level of the office type applet may be set to high, the application privacy level of the life type applet may be set to medium, and the application privacy level of the game type applet may be set to low. When the type of the applet is the office type and the handshake request is generated, the application privacy level carried by the handshake request is high. When the type of the applet is the life type and the handshake request is generated, the application privacy level carried by the handshake request is medium. When the type of the applet is a game type and the handshake request is generated, the application privacy level carried by the handshake request is low.

In this way, the method may include:
by means of the dedicated transport layer security protocol, receiving a corresponding validity duration of the dynamic key that is returned by the server according to the handshake request;
where the validity duration is determined by the server according to the scenario type and the application privacy level carried by the handshake request.

Specifically, because the handshake request can simultaneously carry both the scenario type and the application privacy level, when determining a corresponding dynamic key, the server may match the scenario type with Table 1 (i.e., the preset mapping table) to determine a corresponding initial validity duration of the dynamic key. Assuming that the scenario type carried by the handshake request is an order placing scenario type, the corresponding initial validity duration of the dynamic key can be determined as 10 minutes.

Further, the server may further automatically match a corresponding weight according to the application privacy level. A mapping relationship between the application privacy level and the weight is shown in Table 2. Assuming that the application privacy level is high, an obtained weight is 0.6. Assuming that the application privacy level is medium, the obtained weight is 0.8. Assuming that the application privacy level is low, the obtained weight is 1. That is, a higher the application privacy level indicates a lower weight, and a lower the application privacy level indicates a higher weight.

**Table 2**

| Application privacy level | Weight |
|---|---|
| High | 0.6 |
| Medium | 0.8 |
| Low | 1 |

Based on the weight obtained from Table 2, the previously matched initial validity duration is weighted to obtain a final validity duration of the dynamic key. Assuming that the application privacy level carried by the handshake request is medium, the initial validity duration of 10 minutes is weighted by the matched weight of 0.8, to obtain a final validity duration of 8 minutes.

Based on this, the server may return, by means of a dedicated transport layer security protocol, the dynamic key, the validity duration corresponding to the dynamic key, and the encrypted string to the applet. Correspondingly, the applet may receive, by means of the dedicated transport layer security protocol, the dynamic key, the validity duration corresponding to the dynamic key, and the encrypted string that is obtained by encrypting the dynamic key that are returned by the server according to the handshake request. In this way, the validity duration of the corresponding dynamic key may be flexibly set according to comprehensive consideration of security requirements of different scenario types and applet types when the applet initiates the handshake request, thereby further improving the flexibility of validity duration setting.

In some implementations, after receiving, by means of a dedicated transport layer security protocol, the dynamic key, the validity duration corresponding to the dynamic key, and the encrypted string that is obtained by encrypting the dynamic key that are returned by the server according to the handshake request, the applet further needs to monitor the validity duration of the dynamic key, to ensure real time update of the dynamic key, which specifically includes the following manners:
determining a corresponding validity termination time according to the validity duration; and
when detecting that a current time reaches the validity termination time, by means of the dedicated transport layer security protocol between the applet and the server, re-transmitting a handshake request to the server, and by means of the dedicated transport layer security protocol, re-receiving an updated dynamic key, validity duration, and encrypted string.

Specifically, the server may further simultaneously transmit a generation time of the dynamic key to the applet. In this way, the applet may calculate the validity termination time according to the generation time and the validity duration of the dynamic key. For example, when the generation time of the dynamic key is October 8, 2023, 11:51:00, and the validity duration is 8 minutes, the validity termination time is October 8, 2023, 11:59:00.

In this way, the applet may continuously detect whether the current time reaches the validity termination time. When detecting that the current time does not reach the validity termination time, it indicates that the dynamic key is still valid. On the contrary, when detecting that the current time reaches the validity termination time, it indicates that the dynamic key expires. To achieve better security, the dynamic key needs to be updated. Therefore, the foregoing embodiment may be performed again, to receive an updated dynamic key, validity duration, and encrypted string again, thereby ensuring that the dynamic key may be periodically updated according to the validity duration, increasing variability of the dynamic key, and increasing cracking difficulty.

In some implementations, after generating the dynamic key and obtaining the validity duration of the dynamic key, the server may determine a timestamp of the dynamic key according to the validity duration. The timestamp may include an issue atime (iat) and an expiration atime (exp) of the dynamic key. For example, the issue atime is October 8, 2023, 11:51:00, and assuming that the validity duration is 8 minutes, the expire atime is October 8, 2023, 11:59:00. The server further obtains an identifier of the applet, which may be an account identifier logged in on the instant messaging client that hosts the applet, such as an account identifier "12345", so as to obtain a triplet of [dynamic key, identifier, timestamp]. And the server performs symmetric encryption on the [dynamic key, identifier, timestamp] by using a preset key, to obtain a corresponding encrypted string. In this way, the dynamic key may be subsequently transmitted in a form of the encrypted string over a general transport layer security protocol, avoiding transmission of the dynamic key in plaintext form and improving the security of dynamic key transmission.

The symmetric encryption may be an advanced encryption standard (AES) encryption algorithm. The AES encryption algorithm may use a 128-bit, 192-bit, or 256-bit key to encrypt and decrypt data, and has advantages such as high strength, high speed, and easy implementation. The preset key is a 128-bit, 192-bit, or 256-bit key used for encryption. In addition, unlike symmetric encryption in related arts, the preset key does not need to be transmitted to a terminal but only needs to be retained inside the server, so that leakage of the preset key can be prevented.

Operation 203: Obtain to-be-transmitted data, and encrypt the data by using the dynamic key to generate a corresponding ciphertext.

The to-be-transmitted data, i.e., the to-be-transmitted plaintext, is data that the applet needs to transmit to the server, which may be a login account password or a payment password. The data is highly confidential to a user. If transmitted directly in plaintext, the data is easily intercepted and analyzed by an attacker, allowing the attacker to easily obtain confidential data of the user, resulting in financial losses and data leakage for the user.

In this embodiment of the present application, to resolve the foregoing problem, the data may be symmetrically encrypted by using a dynamic key received by means of a dedicated transport layer security protocol, to generate a corresponding ciphertext, so that an instant attacker blocks the ciphertext and cannot be cracked because there is no dynamic key, thereby avoiding causing economic loss and data leakage of an object.

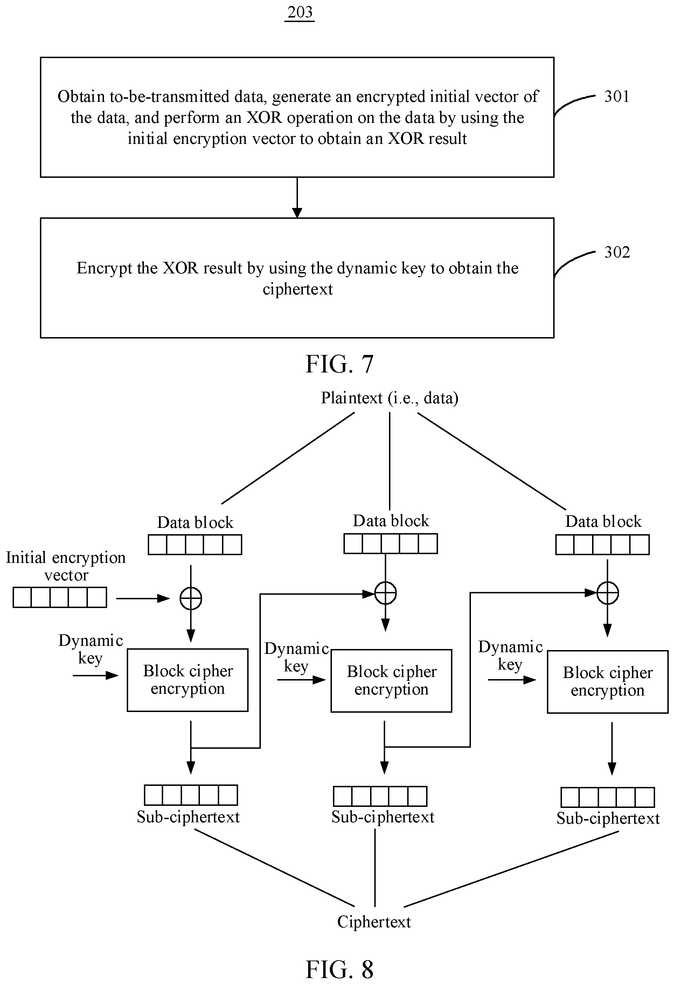

In some implementations, the data may be encrypted by using an AES encryption algorithm with a cipher block chaining (CBC) mode and by using the dynamic key. That is, referring to FIG. 7, operation 203 includes:
Operation 301: Obtain to-be-transmitted data, generate an initial encryption vector of the data, and perform an XOR operation on the data by using the initial encryption vector to obtain an XOR result.
Operation 302: Encrypt the XOR result by using the dynamic key to obtain the ciphertext.

The CBC stands for Cipher Block Chaining, where "Block" means that an encryption process and a decryption process are both performed in blocks. The size of each block is 128 bits (16 bytes). If a length of the plaintext is not an integer multiple of 16 bytes, padding is applied to a last block, to ensure a length of the last block is 16 bytes. "Chaining" means that the ciphertext blocks are connected to each other like a chain. In the CBC mode, an initialized vector IV (i.e., an initial encryption vector in the embodiment of the present application) is needed. Therefore, to-be-transmitted data (i.e., a plaintext) may be obtained, and an initial encryption vector may be generated. The initial encryption vector may be a randomly generated value by an applet, which is then converted into the initial encryption vector. One-Hot encoding may be used for the conversion. For sequence data with discrete values, One-Hot encoding may be used to represent each value as a vector.

In some implementations, the generate an initial encryption vector of the data may further include:
generate a random number;
generating a message sequence number of the data; and
combining the random number and the message sequence number to generate the initial encryption vector.

Specifically, a random number Nonce, such as 20 or 30, may further be generated, and a message sequence number Seq, such as 1, 2, or 3, for generating data is generated according to a data generation order. Correspondingly, Nonce + Seq may be combined, and a corresponding initial encryption vector is generated by means of One-Hot encoding. Because the random number and the message sequence number both dynamically change, the initial encryption vector also continuously changes. It is ensured that even if a same plaintext is encrypted multiple times in real time subsequently, resulting ciphertexts are also different, thereby increasing difficulty in cracking by an attacker.

Correspondingly, after obtaining the initial encryption vector, the data may be encrypted in the CBC mode with reference to a dynamic key, to obtain a final ciphertext. Specifically, the operation 301 includes:
dividing the data into a plurality of data blocks;
for a first data block, performing an XOR operation on the initial encryption vector and the first data block, to obtain a first XOR result of the first data block; and
for each of the other data blocks, performing an XOR operation on a sub-ciphertext of a preceding data block of the data block and the data block, to obtain a second XOR result of the each of the other data blocks.

Operation 302 includes:
encrypting the first XOR result by using the dynamic key to obtain a corresponding sub-ciphertext of the first data block;
encrypting the second XOR result of the each of the other data blocks by using the dynamic key, to obtain a sub-ciphertext corresponding to the each of the other data blocks; and
combining the sub-ciphertexts corresponding to the plurality of data blocks to form the ciphertext.

Specifically, the data may be divided into blocks with each block sized at 128 bits (i.e., 16 bytes). If a length of a plaintext is not an integer multiple of 16 bytes, padding is applied to a last block, to ensure a length of the last block is 16 bytes. To better describe the embodiments of the present application, also referring to FIG. 8, the data may be divided into a plurality of data blocks with each block sized at 16 bytes.

The XOR is short for exclusive OR, and is a mathematical operator applied in logical operations. A mathematical notation for XOR is "⊕", while its computational notation is "xor". The operation rule is: a⊕b=(¬aΛb) V (aΛ¬b). That is, if a and b are different, the XOR result is 1. If a and b are identical, the XOR result is 0. The XOR is also referred to as a half-add operation, and its operation rule is equivalent to a binary addition without carry propagation.

For a first data block, an XOR operation may be performed on the initial encryption vector and the first data block, to generate a first XOR result of the first data block. And the first XOR result is fed into a block cipher encryption module, and is encrypted with reference to the dynamic key, to obtain a sub-ciphertext corresponding to the first data group.

For other data blocks, an XOR operation may be performed on sub-ciphertexts corresponding to preceding data block and the other data blocks, to obtain second XOR results of the other data blocks.

Further, the second XOR result may be fed into the block cipher encryption module and encrypted with reference to the dynamic key, to obtain a sub-ciphertext of another data block. For example, for a second data block, an XOR operation may be performed on the sub-ciphertext corresponding to the first data block and a second data block, to obtain a second XOR result of the second data block. The corresponding second XOR result is fed into the block cipher encryption module and encrypted with reference to the dynamic key, to obtain a sub-ciphertext of the second data block. For a third data block, an XOR operation may be performed on the sub-ciphertext corresponding to the second data block and a third data block, to obtain a second XOR result of the third data block. And the corresponding second XOR result is fed into the block cipher encryption module and is encrypted with reference to the dynamic key, to obtain a sub-ciphertext of the third data block. The rest may be deduced by analogy, and a sub-ciphertext of each other data blocks may be obtained.

Correspondingly, sub-ciphertexts corresponding to each data block may be concatenated, to obtain a final ciphertext.

Operation 204: Transmit the ciphertext and the encrypted string to the server by means of a general transport layer security protocol.

Because transmission capability of the dedicated transport layer security protocol is limited, transmission of the ciphertext and the encrypted string needs to be performed by means of the general transport layer security protocol. That is, the applet may transmit the ciphertext and the encrypted string to the server by means of the general transport layer security protocol.

Because the ciphertext is obtained by encryption with a dynamic key, and the encrypted string is obtained by encryption with a preset key, both the dynamic key and data will not be transmitted in plaintext over general the transport layer security protocol. And the dynamic key is securely transmitted by means of the dedicated transport layer security protocol, while the preset key exists only on the server. Therefore, even if an attacker intercepts the ciphertext and the encrypted string, they cannot perform corresponding decryption, thus protecting data security and improving the security of data transmission.

Still referring to FIG. 6, the terminal 140 encrypts data by using a dynamic key to obtain a corresponding ciphertext, transmits the ciphertext to the server 110 by means of a general transport layer security protocol, and may put the encrypted string token in a URL to transmit to the server 110.

After receiving the ciphertext and the encrypted string, the server may decrypt the encrypted string by using the preset key, to obtain the dynamic key. In this way, the ciphertext may be decrypted by using the dynamic key, to obtain the corresponding data (i.e., the plaintext), thereby implementing secure communication, effectively protecting integrity and security of data from the applet to the server, and preventing an attacker from decrypting and cracking the data.

In some implementations, because the applet encrypts the data by using the AES encryption algorithm with the cipher block chaining (CBC) mode and by using the dynamic key, the applet further needs to transmits the initial encryption vector the server. That is, operation 204 further includes:
transmitting the initial encryption vector to the server by means of the general transport layer security protocol.

The applet may transmit the initial encryption vector, the ciphertext, and the encrypted string to the server by means of the general transport layer security protocol, so that after receiving the initial encryption vector, the ciphertext, and the encrypted string, the server may decrypt the encrypted string by using the preset key to recover the dynamic key, and decrypt the ciphertext by combining the dynamic key with the initial encryption vector. A specific process is:

The ciphertext is divided into multiple ciphertext sub-blocks, each with a block size of 128 bits (i.e., 16 bytes). For a first ciphertext sub-block, decryption is performed by using the dynamic key to obtain a first decryption result. An XOR operation is performed on the first decryption result and the initial encryption vector to obtain a corresponding sub-plaintext of the first ciphertext sub-block. For a second ciphertext sub-block, decryption is performed by using the dynamic key to obtain a second decryption result. An XOR operation is performed on the sub-ciphertext of the preceding ciphertext sub-block (i.e., the first ciphertext sub-block) and the second decryption result to obtain a corresponding sub-plaintext of the second ciphertext sub-block. For a third ciphertext sub-block, decryption is performed by using the dynamic key to obtain a third decryption result. An XOR operation is performed on the sub-ciphertext of the preceding ciphertext sub-block (i.e., the second ciphertext sub-block) and the third decryption result to obtain a corresponding sub-plaintext of the third ciphertext sub-block. The rest may be deduced by analogy, and a sub-plaintext of each ciphertext sub-block may be obtained.

Correspondingly, sub-plaintexts of each ciphertext sub-block may be concatenated to obtain data.

It can be known from the foregoing description that, the embodiments of the present application includes: by means of a dedicated transport layer security protocol between an applet and a server, transmitting a handshake request to the server, the dedicated transport layer security protocol providing higher security than a general transport layer security protocol; by means of the dedicated transport layer security protocol, receiving a dynamic key and an encrypted string obtained by encrypting the dynamic key that are returned by the server according to the handshake request; obtaining to-be-transmitted data and encrypting the data by using the dynamic key to generate a corresponding ciphertext; and by means of a general transport layer security protocol, transmitting the ciphertext and the encrypted string to the server, so that the server recovers the dynamic key by decrypting the encrypted string and decrypts the ciphertext by using the dynamic key to obtain decrypted data. In this way, by means of a dedicated transport layer that provides higher security than a general transport layer security protocol, a dynamic key and an encrypted string obtained by encrypting with the dynamic key are received. To-be-transmitted data is encrypted by using the dynamic key, to generate corresponding ciphertext. And by means of the general transport layer security protocol, the ciphertext and the encrypted string are transmitted to a server, so that the server recovers the dynamic key by decrypting with the encrypted string and decrypts the ciphertext by using the dynamic key, to obtain the decrypted data. Compared with a solution that employs a static key for symmetric encryption in related arts, the embodiments of the present application can receive the dynamic key by means of the dedicated transport layer security protocol with higher security, ensuring that the dynamic key cannot be intercepted by an attacker; and transmit the dynamic key to the server by means of the general transport layer security protocol in the form of the encrypted string, preventing the dynamic key from being transmitted n a plaintext form, thereby effectively preventing the dynamic key from being cracked, and improving the security of data transmission.

With reference to the method described in the foregoing embodiment, the following further provides a detailed description by using an example.

In the present embodiment, a description is made from the perspective of a data transmission apparatus. The data transmission apparatus may be specifically integrated into a computer device that has a storage unit and in which a microprocessor is installed to have a computing capability. The computer device may be a server. That is, in the present embodiment, the server is used for description.

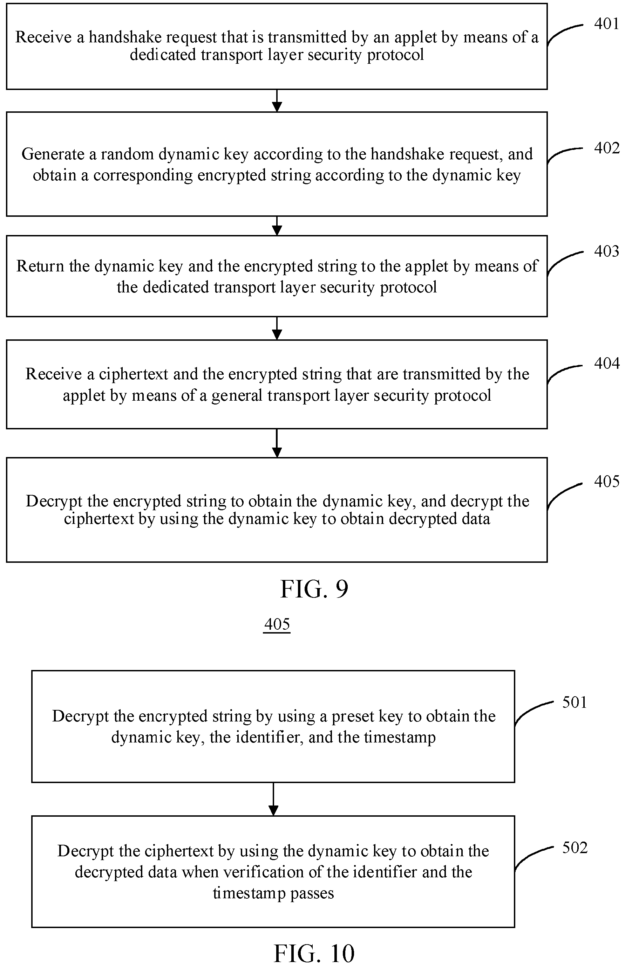

Also referring to FIG. 9, FIG. 9 is a schematic flowchart of a data transmission method according to embodiments of the present application. The method procedure may include the following operations:

Operation 401: Receive a handshake request that is transmitted by an applet by means of a dedicated transport layer security protocol.

A server may receive the handshake request that is transmitted by the applet by means of the dedicated transport layer security protocol. The handshake request may carry an applet identifier of the applet and an instant messaging client version, so that the server may verify whether the applet identifier and the instant messaging client version can be normally used, and does not respond to the handshake request when verifying that the applet identifier or the instant messaging client version cannot be normally used, for example, the applet identifier is incorrect or the instant messaging client version is excessively outdated.

Correspondingly, the server responds to the handshake request when verifying that both the applet identifier and the instant messaging client can be normally used. And operation 402 is performed.

Operation 402: Generate a random dynamic key according to the handshake request, and obtain a corresponding encrypted string according to the dynamic key.

The server generates a random dynamic key by using a secure random number generator in response to the handshake request. A length of the dynamic key may be 128 bits, 256 bits, or the like. That is, the dynamic key changes in real time, and may better defend against being cracked by an attacker.

Because transmission capability of the dedicated transport layer security protocol is limited, subsequent data transmission by the applet still rely on the general transport layer security protocol to transmit. To prevent the dynamic key from being transmitted in a form of a plaintext on the general transport layer security protocol, the server may encrypt the dynamic key according to preset encryption rules, to obtain a corresponding encrypted string.

In some embodiments, to implement better data protection, the dynamic key may be assigned a corresponding validity duration. That is, the dynamic key will correspondingly expire upon reaching the validity duration. The applet needs to re-transmit a handshake request. The server will generate and transmit an updated dynamic key and an encrypted string according to the re-transmitted handshake request to the applet, so that the dynamic key updates periodically to better prevent an attacker from analyzing.

That is, operation 402 may include:
generating the random dynamic key according to the handshake request and determining a validity duration of the dynamic key;
determining, based on the validity duration, a timestamp of the dynamic key; and
obtaining a identifier of the applet, and encrypting the dynamic key, the identifier, and the timestamp, to obtain the corresponding encrypted string.

The validity duration may be manually set, for example, 15 minutes or 30 minutes by default. In this embodiment of the present application, 30 minutes is used as an example for description. The server may generate a random 256-bit dynamic key in response to the handshake request, and determine that the validity duration of the dynamic key is 30 minutes.

Correspondingly, based on the 30-minute validity duration, and to enable subsequent validity verification of the encrypted string, a timestamp of the dynamic key may be determined based on the validity duration. The timestamp may include issue atime (iat) and an expiration atime (exp) of the dynamic key. For example, when the issue atime is October 8, 2023, 11:50:00 and the validity duration is 30 minutes, the expire atime is October 8, 2023, 12:20:00.

Further, to enable subsequent identifier verification of the encrypted string, further obtaining an identifier of the applet, which may be an account identifier logged in on the instant messaging client end that hosts the applet, such as an account identifier "12345", so as to obtain a triplet of [dynamic key, identifier, timestamp]. And the server performs symmetric encryption on the [dynamic key, identifier, timestamp] by using a preset key, to obtain a corresponding encrypted string. In this way, the dynamic key may be subsequently transmitted in a form of the encrypted string over a general transport layer security protocol, avoiding transmission of the dynamic key in plaintext form and improving the security of dynamic key transmission.

The symmetric encryption may be an advanced encryption standard (AES) encryption algorithm. The AES encryption algorithm may use a 128-bit, 192-bit, or 256-bit key to encrypt and decrypt data, and has advantages such as high strength, high speed, and easy implementation. The preset key is a 128-bit, 192-bit, or 256-bit key used for encryption. In addition, unlike symmetric encryption in related arts, the preset key does not need to be transmitted to a terminal but only needs to be retained inside the server, so that leakage of the preset key can be prevented.

In some implementations, the encrypted string may be a binary ciphertext with substantial data length that impacts transmission speed. In addition, because the applet subsequently needs to place the encrypted string into a URL to return to the server, and the URL only supports limited character sets and cannot encode the binary ciphertext, the encrypted string further requires simplification processing. That is encrypting the dynamic key, the identifier, and timestamp, to obtain the corresponding encrypted string. The process includes:
encrypting the dynamic key, the identifier, and the timestamp according to a preset key, to obtain an initial encrypted string; and
transcoding the initial encrypted string by using a preset quantity of printable characters to obtain the corresponding encrypted string.

The preset printable characters may be understood as Base64 encoding. The Base64 encoding is one of the most common encoding manners used for transmitting an 8-bit bytecode, and is a method for representing binary data based on 64 printable characters. An encoding set includes 64 characters: 26 uppercase letters A~Z, 26 lowercase letters a~z, 10 digits 0~9, a symbol "+" and a symbol "/".

Specifically, symmetric encryption is performed on the [dynamic key, identifier, timestamp] by using the preset key to obtain the initial encrypted string. The initial encrypted string is a binary ciphertext. To facilitate subsequent transmission, the initial encrypted string is transcoded by using the Base64 encoding. Specifically, the initial encrypted string may be divided into blocks of three bytes. Each block includes a total of 24 binary digits. Then, the 24 binary digits are divided into four 6-bit blocks (i.e., 6 × 4 = 24 binary digits). Then, each block is prepended with 00 to extend to 8 × 4 = 32 binary bits, that is, four bytes (because each byte is preceded by two 0s, a maximum value of each byte is 63, and the first two 0s are added only to piece up one byte, and the value does not change). Finally, code values of the four bytes are converted into corresponding Base64 characters according to the Base64 encoding table, that is, a corresponding encrypted string is obtained.

In some embodiments, an applet may be applied to different scenarios, such as a login scenario, an order placing scenario, and an information browsing scenario. The login scenario represents that a user implements account login through an applet. The order placing scenario represents that a user implements commodity ordering through an applet. The information browsing scenario represents that a user implements information browsing through an applet. Each scenario has different security requirements. For example, login scenarios require higher security than order placing scenarios, and the order placing scenarios require higher security than information browsing scenarios. Based on this, different validity durations may be set for dynamic keys allocated to different usage scenarios.

Based on this, a handshake request transmitted by the applet may carry a corresponding scenario type. The scenario type indicates a corresponding scenario of an applet when the handshake request is generated. And the scenario type may include, but is not limited to, a login scenario type, an order placing scenario type, or an information browsing scenario type. When the applet generates a handshake request in a login scenario, a scenario type carried by the handshake request is the login scenario type. When the applet generates a handshake request in an order placing scenario, a scenario type carried by the handshake request is the order placing scenario type. Correspondingly, when the applet generates a handshake request in an information browsing scenario, a scenario type carried by the handshake request is the information browsing scenario type.

In this way, determining a validity duration of the dynamic key may include:
determining the corresponding validity duration of the dynamic key according to a preset mapping table; where
the preset mapping table includes mapping relationships between different scenario types and validity durations.

Specifically, for the preset mapping table, refer to the foregoing Table 1. The server may quickly match a validity duration corresponding to a generated dynamic key according to a scenario type carried by the handshake request. Assuming that the scenario type carried by the handshake request is the order placing scenario type, it may be determined that the initial validity duration corresponding to the dynamic key is 10 minutes.

In some implementations, an applet may be applied to different scenarios, such as a login scenario, an order placing scenario, and an information browsing scenario. The login scenario represents that a user implements account login through an applet. The order placing scenario represents that a user implements commodity ordering through an applet. The information browsing scenario represents that a user implements information browsing through an applet. Each scenario has different security requirements. For example, login scenarios require higher security than order placing scenarios, and the order placing scenarios require higher security than information browsing scenarios.

In addition, there are various types of applets, for example, an office type applet, a game type applet, or a life type applet. Each type of applet has different security requirements. For example, the office type applet needs higher security than the life type applet, and the life type applet needs higher security than the game type applet. Based on this, different validity durations may be flexibly set with reference to an application scenario of an applet and a type of the applet.

Based on this, a handshake request may simultaneously carry both the scenario type and an application privacy level. The scenario type indicates a corresponding scenario of the applet when a handshake request is generated. And the scenario type may include, but is not limited to, a login scenario type, an order placing scenario type, or an information browsing scenario type. When the applet generates a handshake request in a login scenario, a scenario type carried by the handshake request is the login scenario type. When the applet generates a handshake request in an order placing scenario, a scenario type carried by the handshake request is the order placing scenario type. Correspondingly, when the applet generates a handshake request in an information browsing scenario, a scenario type carried by the handshake request is the information browsing scenario type.

The application privacy level indicates a privacy level corresponding to an applet type when the handshake request is generated. The application privacy level includes, but is not limited to, three levels: high, medium, and low. In this way, the application privacy level of the office type applet may be set to high, the application privacy level of the life type applet may be set to medium, and the application privacy level of the game type applet may be set to low. When the type of the applet is the office type and the handshake request is generated, the application privacy level carried by the handshake request is high. When the type of the applet is the life type and the handshake request is generated, the application privacy level carried by the handshake request is medium. When the type of the applet is a game type and the handshake request is generated, the application privacy level carried by the handshake request is low.

In this way, determining a validity duration of the dynamic key may further include:
determining the corresponding initial validity duration of the dynamic key according to a preset mapping table; where
the preset mapping table includes mapping relationships between different scenario types and validity durations;
determining a weight according to the application privacy level, and weighting the initial effective time based on the weight, to obtain the effective time of the dynamic key.

Specifically, for the preset mapping table, refer to the foregoing Table 1. The server may quickly match an initial validity duration corresponding to a generated dynamic key according to a scenario type carried by the handshake request. Assuming that the scenario type carried by the handshake request is the order placing scenario type, it may be determined that the initial validity duration corresponding to the dynamic key is 10 minutes.

Further, the server may further automatically match a corresponding weight according to the application privacy level. A mapping relationship between the application privacy level and the weight is also referring to Table 2. For example, when the handshake request carries a medium application privacy level, a weight of 0.8 obtained by matching is applied to weight the initial validity duration of 10 minutes, obtaining a final validity duration of 8 minutes.

Operation 403: Return the dynamic key and the encrypted string to the applet by means of the dedicated transport layer security protocol.

The server may, by means of the dedicated transport layer security protocol, return the dynamic key and the encrypted string to the applet in the embodiments of the present application. The applet may, by means of the dedicated transport layer security protocol, receive the dynamic key and the encrypted string that are obtained by encrypting the dynamic key that are returned by the server, to implement handshake. That is, a connection is established between the applet and the server, so that the applet may encrypt the to-be-transmitted data (i.e., the plaintext) by using the dynamic key. Correspondingly, because an entire protocol of the dedicated transport layer security protocol is highly customized, an existing packet capturing tool is incapable of analyzing. That is, because the dedicated transport layer security protocol is customized, the existing packet capturing tool cannot capture the dynamic key and the encrypted string transmitted by means of a dedicated transport layer security protocol, thereby better ensuring security of the dynamic key transmission.

In some implementations, the server may further return the validity duration of the dynamic key to the applet together, that is, return the dynamic key and the encrypted string to the applet by means of a dedicated transport layer security protocol. The process includes:
by means of the dedicated transport layer security protocol, returning the dynamic key, the corresponding validity duration of the dynamic key, and the encrypted string to the applet.

Specifically, the server may return, by means of the dedicated transport layer security protocol, the dynamic key, the validity duration corresponding to the dynamic key, and the encrypted string to the applet. Correspondingly, the applet may receive, by means of the dedicated transport layer security protocol, the dynamic key, the validity duration corresponding to the dynamic key, and the encrypted string that is obtained by encrypting the dynamic key that are returned by the server according to the handshake request. So that the applet may encrypt the to-be-transmitted data by using the dynamic key within the validity termination time determined according to the validity duration.

Operation 404: Receive a ciphertext and the encrypted string that are transmitted by the applet by means of a general transport layer security protocol.

The applet may symmetrically encrypt the data (i.e., the plaintext) by using the dynamic key that are received by means of the dedicated transport layer security protocol, to generate a corresponding ciphertext; and transmit the ciphertext and the encrypted string to the server by means of the general transport layer security protocol. Correspondingly, the server may receive the ciphertext and the encrypted string that are transmitted by the applet by means of the general transport layer security protocol. The encrypted string can be placed in a URL by the applet for transmission.

Because the ciphertext is obtained by encryption with a dynamic key, and the encrypted string is also obtained by encryption, both the dynamic key and data will not be transmitted in plaintext over the general transport layer security protocol. And the dynamic key is securely transmitted by means of the dedicated transport layer security protocol, while the preset key exists only on the server. Therefore, even if an attacker intercepts the ciphertext and the encrypted string, they cannot perform corresponding decryption, thus protecting data security and improving the security of data transmission.

Operation 405: Decrypt the encrypted string to obtain the dynamic key, and decrypt the ciphertext by using the dynamic key to obtain decrypted data.

After receiving the ciphertext and the encrypted string, the server may decrypt the encrypted string by using the preset key, to obtain the dynamic key. In this way, the ciphertext may be decrypted by using the dynamic key, to obtain the corresponding data (i.e., the plaintext), thereby implementing secure communication, effectively protecting integrity and security of data from the applet to the server, and preventing an attacker from decrypting and cracking the data.

In some implementations, when the encrypted string is obtained by using the Base64 encoding, the encrypted string further needs to be first restored to binary ciphertext, and then the encrypted string is decrypted.

In some implementations, the server stores the preset key that is previously used to symmetrically encrypt the dynamic key. Therefore, the encrypted string needs to be decrypted by using the preset key. That is, referring to FIG. 10, operation 405 includes:
Operation 501: Decrypt the encrypted string by using a preset key to obtain the dynamic key, the identifier, and the timestamp;
Operation 502: Decrypt the ciphertext by using the dynamic key to obtain the decrypted data when verification of the identifier and the timestamp passes.

After receiving the ciphertext and the encrypted string, the server may decrypt the encrypted string by using the preset key, to obtain the [dynamic key, identifier, timestamp] triplet in the encrypted string. In this way, the server may perform identity verification on a transmitter according to the identifier obtained by decryption, and perform time verification according to the timestamp obtained by decryption. For example, the server may obtain a to-be-verified identifier of the transmitter, compare the to-be-verified identifier with the identifier obtained by decryption. When the to-be-verified identifier matches the identifier obtained by decryption, the server determines that identity verification passes; when they do not match, the server determines that the identity verification does not pass. The server may further obtain a generation time of the ciphertext, to determine whether the generation time is in a validity duration indicated by the timestamp. And when the generation time is in the validity duration indicated by the timestamp, the server determines that timestamp verification passes; when the generation time is not in the validity duration indicated by the timestamp, the server determines that the timestamp verification does not pass.

Further, when verification of the identifier and the timestamp both pass, that is, it indicates that the identity verification and the time verification both pass, the ciphertext may be decrypted by using the dynamic key, to obtain the decrypted data (that is, the plaintext), thereby implementing secure communication, effectively protecting integrity and security of data from the applet to the server, and preventing an attacker from decrypting and cracking the data. In this way, the server does not need to store an identifier and a dynamic key, and only needs to decrypt the encrypted string to obtain the identifier and the dynamic key, thereby saving a storage resource of the server.

In some implementations, to prevent an identity tampering attack and a replay attack, before decrypting the ciphertext, identity verification and time verification further need to be performed. That is, when verification of the identifier and the timestamp both passed, the ciphertext is decrypted by using the dynamic key to obtain decrypted data. The process includes:
obtaining a current identifier of an applet transmitting the ciphertext and the encrypted string, and a generation time of the ciphertext;
obtaining a validity termination time indicated by the timestamp; and
when detected that the identifier matches the current identifier, and the generation time is before the validity termination time, decrypting the ciphertext by using the dynamic key, to obtain the decrypted data.

The identity tampering attack refers to an attacker intercepting data transmitted by an applet by means of a general transport layer security protocol and then transmitting the data through the attacker's client to conduct an attack. A replay attack refers to a type of attack where an attacker does not need to decrypt an actual data packet but instead records a data request itself and replays the data request after a period of time.

In this embodiment of the present application, to prevent the foregoing identity tampering attack and replay attack, identity verification and time verification are performed. Specifically, the server may obtain the current identifier of the applet transmitting the ciphertext and the encrypted string and the generation time of the ciphertext.

Further, the current identifier may be compared with the identifier obtained by decryption. When the two are identical, the server determines that the identifier matches the current identifier; when the two does not match, the server determines that the identifier dose not match the current identifier, indicating identity tampering. Correspondingly, a validity termination time of the dynamic key may also be determined according to an expire atime in the timestamp. The sever detects whether the generation time precedes the validity termination time. When detecting that the generation time precedes the validity termination time, the time verification passes; when detecting that the generation time does not precede the validity termination time, the time verification does not pass, indicating a replay attack. Based on this, when detecting that the identifier matches the current identifier and the generation time precedes the validity termination time, that is, when both the identity verification and the time verification pass, performing decryption of the ciphertext by using the dynamic key to obtain decrypted data. In this way, it can prevent an identity tampering attack and a replay attack, thereby better protecting data transmission security.

In some implementations, the applet may encrypt the data by using the AES encryption algorithm with the cipher block chaining (CBC) mode and by using the dynamic key. Consequently, the server end decryption of the ciphertext by using the dynamic key further requires the initial encryption vector to be decrypted concurrently. That is, the decryption of the ciphertext by using the dynamic key to obtain decrypted data includes:
receiving an initial encryption vector transmitted by an applet; and
decrypting the ciphertext by using the dynamic key to obtain a first decryption result, and performing an XOR operation on the first decryption result and the initial encryption vector, to obtain the decrypted data.

Specifically, the server may further receive the initial encryption vector transmitted by the applet. The server divides the ciphertext into multiple ciphertext sub-blocks, each with a block size of 128 bits (i.e., 16 bytes). For a first ciphertext sub-block, decryption is performed by using the dynamic key to obtain a first decryption result. An XOR operation is performed on the first decryption result and the initial encryption vector to obtain a corresponding sub-plaintext of the first ciphertext sub-block. For a second ciphertext sub-block, decryption is performed by using the dynamic key to obtain a second decryption result. An XOR operation is performed on the sub-ciphertext of the preceding ciphertext sub-block (i.e., the first ciphertext sub-block) and the second decryption result to obtain a corresponding sub-plaintext of the second ciphertext sub-block. For a third ciphertext sub-block, decryption is performed by using the dynamic key to obtain a third decryption result. An XOR operation is performed on the sub-ciphertext of the preceding ciphertext sub-block (i.e., the second ciphertext sub-block) and the third decryption result to obtain a corresponding sub-plaintext of the third ciphertext sub-block. The rest may be deduced by analogy, and a sub-plaintext of each ciphertext sub-block may be obtained.

Correspondingly, sub-plaintexts of each ciphertext sub-block may be concatenated to obtain decrypted data.

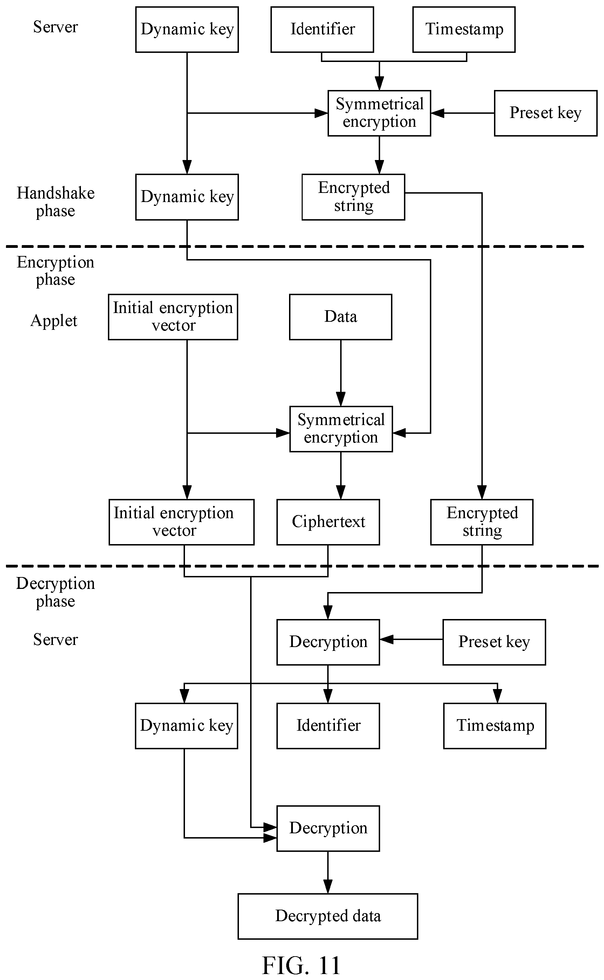

To better describe the embodiments of the present application, also referring to FIG. 11 for understanding. FIG. 11 is a schematic interaction diagram of a data transmission method according to embodiments of the present application. In a handshake phase, a server may generate a dynamic key according to the handshake request, and symmetrically encrypt a dynamic key identifier and a timestamp by using a preset key, to generate a corresponding encrypted string. And by means of a dedicated transport layer security protocol, the server transmits the dynamic key and the encrypted string to an applet.

In an encryption phase, the applet may symmetrically encrypt data (that is, plaintext) by using an initial encryption vector and the dynamic key, to obtain a corresponding ciphertext. And by means of the general transport layer security protocol, the applet transmits the initial encryption vector, the ciphertext, and the encrypted string to the server.

In a decryption phase, the server decrypts the encrypted string by using the preset key, to recover the dynamic key, the identifier, and the timestamp. And the server decrypts, after verification of the identifier and the timestamp passes, the ciphertext by using the dynamic key in combination with the initial encryption vector, to obtain decrypted data. In this way, by means of a dedicated transport layer that provides higher security than a general transport layer security protocol, a dynamic key and an encrypted string obtained by encrypting with the dynamic key are transmitted. To-be-transmitted -transmitted data is encrypted by using the dynamic key, to generate corresponding ciphertext. And by means of the general transport layer security protocol, the ciphertext and the encrypted string are transmitted to a server, so that the server recovers the dynamic key by decrypting with the encrypted string and decrypts the ciphertext by using the dynamic key, to obtain the decrypted data. Compared with a solution that employs a static key for symmetric encryption in related arts, the embodiments of the present application can receive the dynamic key by means of the dedicated transport layer security protocol with higher security, ensuring that the dynamic key cannot be intercepted by an attacker; and transmit the dynamic key to the server by means of the general transport layer security protocol in the form of the encrypted string, preventing the dynamic key from being transmitted in a plaintext form, thereby effectively preventing the dynamic key from being cracked, and improving the security of data transmission.

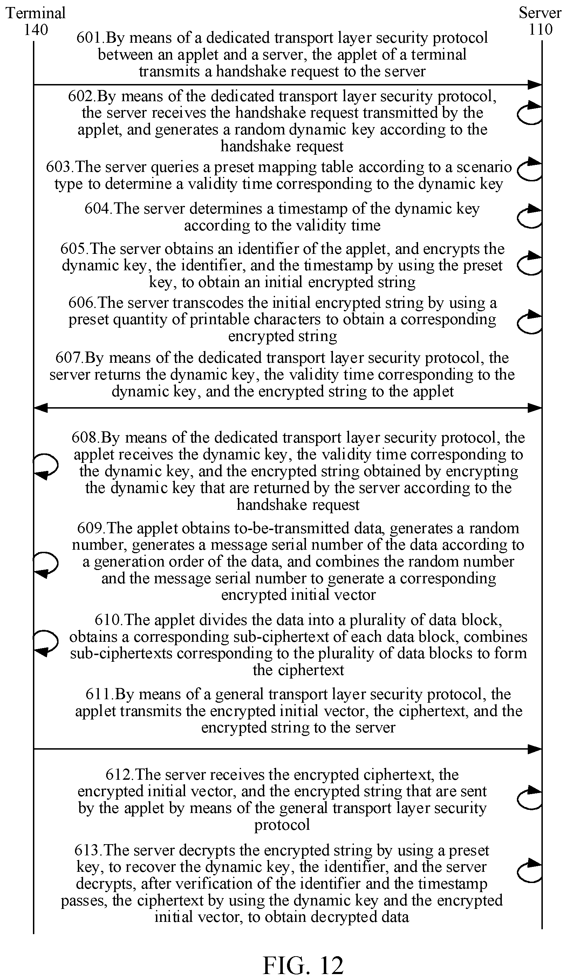

To better describe the embodiments of the present application, also referring to FIG. 12 for understanding. FIG. 12 is an interaction flowchart of a data transmission method according to embodiments of the present application. Referring to FIG. 12 below, the specific interaction process of the data transmission method in the embodiments of the present application is described in detail. The process includes, but are not limited to, the following operation 601 to operation 613.

Operation 601: By means of a dedicated transport layer security protocol between an applet and a server, the applet of a terminal 140 transmits a handshake request to the server 110.

Operation 602: By means of the dedicated transport layer security protocol, the server 110 receives the handshake request transmitted by the applet, and generates a random dynamic key according to the handshake request.

Operation 603: The server 110 queries a preset mapping table according to a scenario type to determine a validity duration corresponding to the dynamic key.

Operation 604: The server 110 determines a timestamp of the dynamic key according to the validity duration.

Operation 605: The server 110 obtains an identifier of the applet, and encrypts the dynamic key, the identifier, and the timestamp by using the preset key, to obtain an initial encrypted string.

Operation 606: The server 110 transcodes the initial encrypted string by using a preset quantity of printable characters to obtain a corresponding encrypted string.

Operation 607: By means of the dedicated transport layer security protocol, the server 110 returns the dynamic key, the validity duration corresponding to the dynamic key, and the encrypted string to the applet of the terminal 140.

Operation 608: By means of the dedicated transport layer security protocol, the applet of the terminal 140 receives the dynamic key, the validity duration corresponding to the dynamic key, and the encrypted string that are returned by the server.

Operation 609: The applet of the terminal 140 obtains to-be-transmitted data, generates a random number, generates a message serial number of the data according to a generation order of the data, and combines the random number and the message serial number to generate a corresponding initial encryption vector.

Operation 610: The applet of the terminal 140 divides the data into a plurality of data blocks. For a first data block, an XOR operation is performed on the initial encryption vector and the first data block, to obtain a first XOR result of the first data block. The first XOR result is encrypted by using the dynamic key, to obtain a corresponding sub-ciphertext of the first data block. For other data blocks, an XOR operation is performed on sub-ciphertexts corresponding to preceding data blocks of the other data blocks and the other data blocks, to obtain second XOR results of the other data blocks. The second XOR results are encrypted by using the dynamic key, to obtain corresponding sub-ciphertexts of the other data blocks. The sub-ciphertexts corresponding to the plurality of data blocks are combined to form the ciphertext.

Operation 611: By means of a general transport layer security protocol, the applet of the terminal 140 transmits the initial encryption vector, the ciphertext, and the encrypted string to the server 110.

Operation 612: The server 110 receives the encrypted ciphertext, the initial encryption vector, and the encrypted string that are sent by the applet by means of the general transport layer security protocol.

Operation 613: The server 110 decrypts the encrypted string by using a preset key, to recover the dynamic key, the identifier, and the server decrypts, after verification of the identifier and the timestamp passes, the ciphertext by using the dynamic key and the initial encryption vector, to obtain decrypted data.

Nouns have meanings the same as those in the foregoing data transmission method. For specific implementation details, refer to the descriptions in the method embodiments. Details are not described herein again.

To better implement the data transmission method provided in the embodiments of the present application, the embodiments of the present application further provide an apparatus based on the foregoing data transmission method. Nouns have meanings the same as those in the foregoing data transmission method. For specific implementation details, refer to the descriptions in the method embodiments. Details are not further described herein.

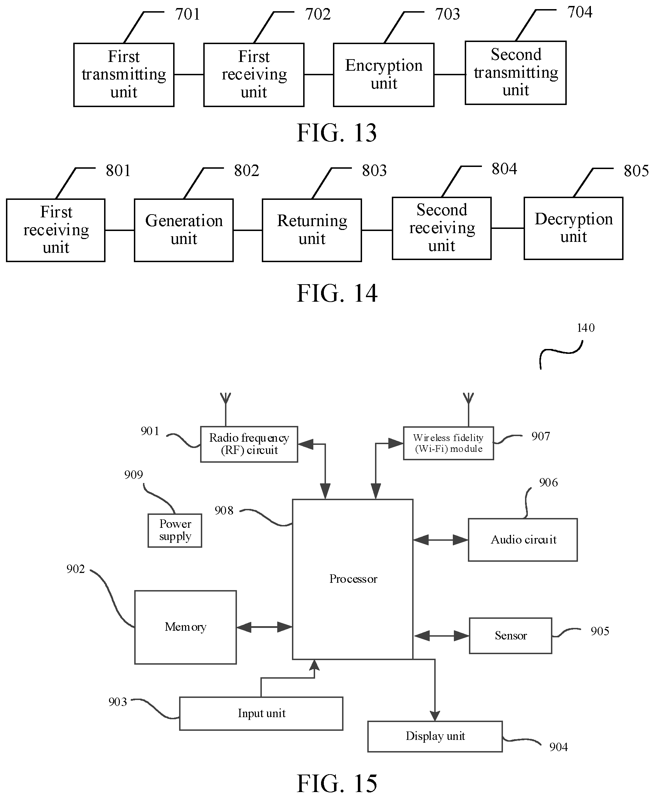

Referring to FIG. 13, FIG. 13 is a schematic structural diagram of a data transmission apparatus according to embodiments of the present application. The data transmission apparatus is applied to a terminal. The data transmission apparatus may include a first transmitting unit 701, a first receiving unit 702, an encryption unit 703, a second transmitting unit 704, and the like.

The first transmitting unit 701 is configured for, by means of a dedicated transport layer security protocol between an applet and a server, transmitting a handshake request to the server, the dedicated transport layer security protocol providing higher security than a general transport layer security protocol.

The first receiving unit 702 is configured for, by means of the dedicated transport layer security protocol, receiving a dynamic key and an encrypted string obtained according to the dynamic key that are returned by the server according to the handshake request.

The encryption unit 703 is configured for obtaining to-be-transmitted data and encrypting the data by using the dynamic key to obtain a ciphertext.

The second transmitting unit 704 is configured for, by means of the general transport layer security protocol, transmitting the ciphertext and the encrypted string to the server, so that the server decrypts the encrypted string to obtain the dynamic key, and decrypts the ciphertext by using the dynamic key to obtain decrypted data.

For specific implementations of each of the foregoing units, reference may be made to the foregoing embodiments. Details are not described herein again.

Referring to FIG. 14, FIG. 14 is a schematic structural diagram of a data transmission apparatus according to embodiments of the present application. The data transmission apparatus is applied to a terminal. The data transmission apparatus may include a first receiving unit 801, a generation unit 802, a returning unit 803, a second receiving unit 804, a decryption unit 805, and the like.

The first receiving unit 801 is configured for receiving a handshake request that is transmitted by an applet by means of a dedicated transport layer security protocol, the dedicated transport layer security protocol providing higher security than a general transport layer security protocol.

The generation unit 802 is configured for generating a random dynamic key according to the handshake request, and obtaining an encrypted string according to the dynamic key.

The returning unit 803 is configured for, by means of the dedicated transport layer security protocol, returning the dynamic key and the encrypted string to the applet, so that the applet encrypts to-be-transmitted data by using the dynamic key to obtain a ciphertext.

The second receiving unit 804 is configured for receiving the ciphertext and the encrypted string that are transmitted by the applet by means of the general transport layer security protocol.

The decryption unit 805 is configured for decrypting the encrypted string to obtain the dynamic key, and decrypting the ciphertext by using the dynamic key to obtain decrypted data.

For specific implementations of each of the foregoing units, reference may be made to the foregoing embodiments. Details are not described herein again.

Embodiments of the present application further provides a computer device. The computer device may be a terminal. FIG. 15 is a schematic structural diagram of a terminal according to embodiments of the present application. Specifically,
the computer device may include components such as a radio frequency (RF) circuit 901, a memory 902 including one or more computer-readable storage media, an input unit 903, a display unit 904, a sensor 905, an audio circuit 906, a wireless fidelity (Wi-Fi) module 907, a processor 908 including one or more processing cores, and a power supply 909. A person skilled in the art may understand that a terminal structure shown in FIG. 15 constitutes no limitation to the terminal, and the terminal may include more or fewer components than those shown in the figure, or some components may be combined, or a different component deployment may be used. Where:

The memory 902 may be configured to store a software program and module. The processor 908 runs the software program and module stored in the memory 902, to perform various functional applications and information retrieval. The memory 902 may mainly include a program storage region and a data storage region. The program storage region may store an operating system, an application program required by at least one function (for example, a sound playback function and an image display function), and the like. The data storage region may store data (for example, audio data and an address book) created according to the use of the terminal, and the like. In addition, the memory 902 may include a high-speed random access memory, and may also include a non-volatile memory, such as at least one magnetic disk storage device, a flash memory, or another volatile solid-state memory. Correspondingly, the memory 902 may further include a memory controller, to allow the processor 908 and the input unit 903 to access the memory 902.

In the present embodiment, the processor 908 in the terminal may load, according to the following instructions, executable files corresponding to processes of one or more applications into the memory 902. The processor 908 runs the applications stored in the memory 902, to implement the method provided in each embodiment of the present application.

In the foregoing embodiments, the descriptions of the embodiments have different focuses, and for a part that is not described in detail in an embodiment, reference may be made to the detailed description of the file transmission method above. Details are not described herein again.

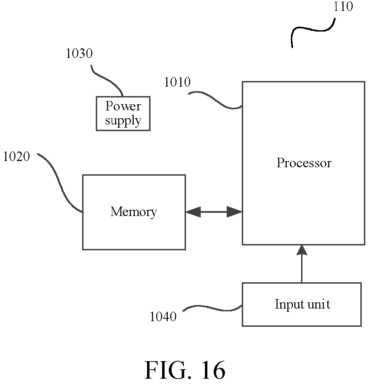

Embodiments of the present application further provides a computer device. The computer device may be a server. FIG. 16 is a schematic structural diagram of a server according to embodiments of the present application. Specifically,
the computer device may include components such as a processor 1010 including one or more processing cores, a memory 1020 including one or more computer-readable storage media, a power supply 1030, and an input unit 1040. A person skilled in the art may understand that the structure of the terminal device shown in FIG. 16 does not constitute a limitation on the terminal device, which may include more or fewer components than those illustrated, or some components may be combined, or a different component deployment may be used. Where:

Although not shown in the figure, the computer device may further include a display unit, and the like. Details are not described herein again. Specifically, in this embodiment, the processor 1010 in the computer device may load, according to the following instructions, executable files corresponding to processes of one or more computer programs into the memory 1020, and the processor 1010 runs the application programs stored in the memory 1020, thereby implementing various method operations provided in the foregoing embodiments.

In the foregoing embodiments, the descriptions of the embodiments have different focuses, and for a part that is not described in detail in an embodiment, reference may be made to the detailed description of the queue processing method above. Details are not described herein again.

A person of ordinary skill in the art may understand that, all or some operations of the methods in the foregoing embodiments may be implemented by using instructions, or implemented through instructions controlling relevant hardware, and the instructions may be stored in a computer-readable storage medium and loaded and executed by a processor.

Accordingly, an embodiment of the present application provides a computer-readable storage medium, storing a plurality of instructions. The instructions can be loaded by a processor, to perform the operations in the data transmission method according to the embodiments of the present application.

According to an aspect of the present application, a computer program product or a computer program is provided. The computer program product or the computer program includes a computer instruction. The computer instruction is stored in a computer-readable storage medium. A processor of a computer device reads the computer instructions from the computer-readable storage medium, and executes the computer instructions, so that the computer device performs the method provided in the various optional implementations provided in the foregoing embodiments.

For specific implementations of each of the foregoing operations, reference may be made to the foregoing embodiments. Details are not described herein again.

The computer-readable storage medium may include: a read-only memory (ROM), a random access memory (RAM), a magnetic disk, an optical disc or the like.

Because with the instructions stored in the computer-readable storage medium, the operations of any data transmission method provided in the embodiments of the present application may be performed, beneficial effects that can be implemented by any data transmission method in the embodiments of the present application can be implemented. For details, refer to the foregoing embodiments. Details are not further described herein.

The data transmission method and apparatus, the apparatus, the storage medium, and the device provided in the embodiments of the present application are described above in detail. Although the principles and implementations of the present application are described by using specific examples in this specification, the foregoing descriptions of the embodiments are merely intended to help understand the method and core idea of the present application. Moreover, a person skilled in the art may make modifications to the specific implementations and application range according to the idea of the present application. In conclusion, the content of the specification is not to be construed as a limitation to the present application.

## Claims

1. A data transmission method, performed by a terminal device, and comprising:
by means of a dedicated transport layer security protocol between an applet running in the terminal device and a server, transmitting a handshake request to the server, the dedicated transport layer security protocol providing higher security than a general transport layer security protocol;
by means of the dedicated transport layer security protocol, receiving, from the server, a dynamic key and an encrypted string obtained based on the dynamic key;
obtaining to-be-transmitted data, and encrypting the to-be-transmitted data using the dynamic key to obtain a ciphertext; and
by means of the general transport layer security protocol, transmitting the ciphertext and the encrypted string to the server, to enable the server to decrypt the encrypted string to obtain the dynamic key, and decrypt the ciphertext by using the dynamic key to obtain decrypted data.

2. The data transmission method according to claim 1, wherein the obtaining to-be-transmitted data, and encrypting the to-be-transmitted data using the dynamic key to obtain a ciphertext comprises:
obtaining the to-be-transmitted data, generating an initial encryption vector of the to-be-transmitted data, and performing an XOR operation on the to-be-transmitted data by using the initial encryption vector, to obtain an XOR result; and
encrypting the XOR result by using the dynamic key to obtain the ciphertext.

3. The data transmission method according to claim 2, wherein the generating an initial encryption vector of the data comprises:
generating a random number;
generating a message sequence number of the to-be-transmitted data; and
combining the random number and the message sequence number to generate the initial encryption vector.

4. The data transmission method according to claim 3, wherein the performing an XOR operation on the to-be-transmitted data by using the initial encryption vector, to obtain an XOR result comprises:
dividing the to-be-transmitted data into a plurality of data blocks, the plurality of data blocks comprising N data blocks, and N being greater than 1;
for a 1-th data block, performing an XOR operation on the initial encryption vector and the 1-th data block, to obtain a XOR result of the 1-th data block; and
for an i-th data block, performing an XOR operation on a sub-ciphertext of an (i-1)-th data block and the i-th data block, to obtain a second XOR result of the i-th data block, i being greater than 1 and smaller or equal to N; and
the encrypting the XOR result by using the dynamic key to obtain the ciphertext comprises:
encrypting the first XOR result by using the dynamic key to obtain a sub-ciphertext of the 1-th data block;
for the i-th data block, encrypting the i-th second XOR result of the i-th data block by using the dynamic key, to obtain a sub-ciphertext corresponding to the i-th data block; and
combining N sub-ciphertexts each corresponding to one of the plurality of data blocks to form the ciphertext.

5. The data transmission method according to any one of claims 2 to 4, further comprising:
by means of the general transport layer security protocol, transmitting the initial encryption vector to the server, to enable the server to: decrypt the ciphertext by using the dynamic key to obtain a first decryption result, and perform an XOR operation on the first decryption result and the initial encryption vector, to obtain the decrypted data.

6. The data transmission method according to any one of claims 1 to 5, wherein the handshake request carries a scenario type;
and the method further comprises:
by means of the dedicated transport layer security protocol, receiving a validity period of the dynamic key from the server;
wherein the validity duration is determined by the server according to the scenario type carried by the handshake request.

7. The data transmission method according to claim 6, further comprising:
determining a validity termination time of the dynamic key according to the validity duration; and
when detecting that a current time reaches the validity termination time, by means of the dedicated transport layer security protocol between the applet and the server, re-transmitting a handshake request to the server, and by means of the dedicated transport layer security protocol, re-receiving an updated dynamic key, an updated validity duration, and an updated encrypted string.

8. The data transmission method according to claim 6, further comprising:
when detecting that the scenario type is changed, deleting the dynamic key, the validity duration of the dynamic key, and the encrypted string obtained by encrypting the dynamic key; and
by means of the dedicated transport layer security protocol between the applet and the server, re-transmitting a handshake request to the server, and by means of the dedicated transport layer security protocol, re-receiving an updated dynamic key, an updated validity duration, and an updated encrypted string.

9. The data transmission method according to any one of claims 1 to 5, wherein the handshake request carries a scenario type and an application privacy level;
and the method further comprises:
by means of the dedicated transport layer security protocol, receiving a validity duration of the dynamic key from the server obtained according to the handshake request;
wherein the validity duration is determined by the server according to both the scenario type and the application privacy level carried by the handshake request.

10. The data transmission method according to any one of claims 1 to 9, wherein the dedicated transport layer security protocol is a managed mode transport layer security, MMTLS, protocol; and the general transport layer security protocol is a transport layer security, TLS, protocol.

11. A data transmission method, performed by a server device, comprising:
receiving a handshake request that is transmitted by an applet by means of a dedicated transport layer security protocol, the dedicated transport layer security protocol providing higher security than a general transport layer security protocol;
generating a random dynamic key according to the handshake request and obtaining an encrypted string according to the dynamic key;
by means of the dedicated transport layer security protocol, returning the dynamic key and the encrypted string to the applet, to enable the applet to encrypt to-be-transmitted data by using the dynamic key to obtain a ciphertext;
receiving the ciphertext and the encrypted string from the applet by means of the general transport layer security protocol; and
decrypting the encrypted string to obtain the dynamic key, and decrypting the ciphertext by using the dynamic key to obtain decrypted data.

12. The data transmission method according to claim 11, wherein the generating a random dynamic key according to the handshake request and obtaining an encrypted string according to the dynamic key comprises:
generating the random dynamic key according to the handshake request and determining a validity duration of the dynamic key;
determining, based on the validity duration, a timestamp of the dynamic key; and
obtaining a user identifier of the applet, and encrypting the dynamic key, the user identifier, and the timestamp, to obtain the encrypted string.

13. The data transmission method according to claim 12, wherein the encrypting the dynamic key, the user identifier, and the timestamp, to obtain the encrypted string comprises:
encrypting the dynamic key, the user identifier, and the timestamp by using a preset key, to obtain an initial encrypted string; and
encoding the initial encrypted string by using a preset quantity of printable characters, to obtain the encrypted string.

14. The data transmission method according to any one of claims 12 to 13, wherein the handshake request carries a scenario type; and
the determining a validity duration of the dynamic key comprises:
determining the validity duration of the dynamic key according to a first preset mapping table; wherein
the first preset mapping table comprises mapping relationships each between a scenario type and a corresponding validity duration .

15. The data transmission method according to any one of claims 12 to 13, wherein the handshake request carries a scenario type and an application privacy level; and
the determining a validity duration of the dynamic key comprises:
determining an initial validity duration of the dynamic key according to a second preset mapping table; wherein
the second preset mapping table comprises mapping relationships each between a scenario type and a corresponding validity duration; and
determining a weight according to the application privacy level, and weighting the initial validity duration according to the weight, to obtain the validity duration of the dynamic key.

16. The data transmission method according to any one of claims 12 to 15, further comprising:
by means of the dedicated transport layer security protocol, returning the validity duration of the dynamic key to the applet, to enable the applet to encrypt the to-be-transmitted data by using the dynamic key within the validity duration.

17. The data transmission method according to any one of claims 12 to 16, further comprising:
decrypting the encrypted string received from the applet to obtain the user identifier and the timestamp; and
when verification of the identifier and the timestamp passes, decrypting the ciphertext by using the dynamic key.

18. The data transmission method according to claim 17, wherein the decrypting the ciphertext by using the dynamic key to obtain the decrypted data comprises:
receiving an initial encryption vector transmitted by an applet; and
decrypting the ciphertext by using the dynamic key to obtain a first decryption result, and performing an XOR operation on the first decryption result and the initial encryption vector, to obtain the decrypted data.

19. A data transmission apparatus, comprising:
a first transmitting unit, configured for, by means of a dedicated transport layer security protocol between an applet running in the terminal device and a server, transmitting a handshake request to the server, the dedicated transport layer security protocol providing higher security than a general transport layer security protocol;
a first receiving unit, configured for, by means of the dedicated transport layer security protocol, receiving, from the server, a dynamic key and an encrypted string obtained based on the dynamic key ;
an encryption unit, configured for obtaining to-be-transmitted data, and encrypting the to-be-transmitted data using the dynamic key to obtain a ciphertext; and
a second transmitting unit, configured for, by means of the general transport layer security protocol, transmitting the ciphertext and the encrypted string to the server, to enable the server to decrypt the encrypted string to obtain the dynamic key, and decrypt the ciphertext by using the dynamic key to obtain decrypted data.

20. A computer-readable storage medium, having a plurality of instructions stored therein, the instructions being suitable to be loaded by a processor to execute operations of the data transmission method according to any one of claims 1 to 18.

21. A computer device, comprising a memory, a processor and a computer program stored in the memory and executable in the processor, the processor, when executing the computer program, implementing operations of the data transmission method according to any one of claims 1 to 18.

22. A computer program product, comprising computer instructions, the computer instructions being stored in a computer-readable storage medium, and the computer instructions, when executed, implementing operations of the data transmission method according to any one of claims 1 to 18.
